(19) Europäisches Patentamt
European Patent Office
Office européen des brevets

(11) **EP 2 279 359 B1**

(12) **EUROPÄISCHE PATENTSCHRIFT**

(45) Veröffentlichungstag und Bekanntmachung des Hinweises auf die Patenterteilung:
**04.06.2014 Patentblatt 2014/23**

(21) Anmeldenummer: **09753701.3**

(22) Anmeldetag: **11.03.2009**

(51) Int Cl.:
*F16F 15/02* (2006.01)    *B64D 1/22* (2006.01)

(86) Internationale Anmeldenummer:
**PCT/EP2009/052886**

(87) Internationale Veröffentlichungsnummer:
**WO 2009/144046 (03.12.2009 Gazette 2009/49)**

(54) **VERFAHREN UND VORRICHTUNG ZUR AKTIVEN DÄMPFUNG VON VERTIKALSCHWINGUNGEN BEI EINEM HUBSCHRAUBER MIT ANGEHÄNGTER AUSSENLAST**

METHOD AND DEVICE FOR ACTIVELY DAMPING VERTICAL OSCILLATIONS IN A HELICOPTER HAVING AN ATTACHED EXTERIOR PAYLOAD

PROCÉDÉ ET DISPOSITIF POUR L'AMORTISSEMENT ACTIF DES VIBRATIONS VERTICALES DANS UN HÉLICOPTÈRE À CHARGE EXTÉRIEURE SUSPENDUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.05.2008 DE 102008025298**

(43) Veröffentlichungstag der Anmeldung:
**02.02.2011 Patentblatt 2011/05**

(73) Patentinhaber: **Deutsches Zentrum für Luft- und Raumfahrt e.V.**
**51147 Köln (DE)**

(72) Erfinder:
• **Brenner, Hanno**
  **38106 Braunschweig (DE)**
• **Hamers, Mario**
  **86609 Donauwörth (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
**GB-A- 2 415 418    US-A- 3 838 836**
**US-A- 3 904 156**

**Beschreibung**

## TECHNISCHES GEBIET DER ERFINDUNG

Die Erfindung betrifft ein Verfahren und eine Vorrichtung zur Dämpfung von Vertikalschwingungen bei einem Hubschrauber mit angehängter Außenlast mit den Merkmalen des Oberbegriffs des unabhängigen Patentanspruchs 1 bzw. 7.

Hubschrauber werden häufig eingesetzt, um schwere Lasten als Außenlasten zu transportieren. Diese Lasten hängen an Seilen oder Kabeln, wofür in dieser Beschreibung auch allgemein der Begriff Lastgeschirr verwendet wird, unter dem Hubschrauber und können je nach Aufhängung mehr oder weniger Pendelschwingungen in der Längs- und Querachse sowie Vibrationen in der Hochachse (vertikal) entwickeln. Der Transport von Außenlasten mit dem Hubschrauber verschlechtert in der Regel Stabilität und Flugeigenschaften des Gesamtsystems. Besonders stark wirkt sich dies bei schweren Außenlasten aus. So hat der Transport von Außenlasten immer wieder zu Zwischenfällen und Unfällen geführt.

Gegenstand der vorliegenden Erfindung ist die Dämpfung von vertikalen Schwingungen des Gesamtsystems Hubschrauber-Lastgeschirr-Außenlast. Diese Vertikalschwingungen gefährden die Kontrollierbarkeit des Hubschraubers und damit die Flugsicherheit. Vertikale Schwingungsformen entstehen durch die Elastizität des Gesamtsystems Hubschrauber und Außenlast. Unter Umständen sind diese Schwingungsformen schwach gedämpft, und erreichen im Resonanzfall sehr große Amplituden. In der englischsprachigen Literatur wird dieses Schwingungsphänomen als *vertical bounce* bezeichnet. Bei den vergleichsweise hohen Frequenzen der Schwingungen wird der Pilot noch zu Steuerreaktionen verleitet, kann sie aber nicht mehr sinnvoll abstimmen. Verbunden mit der oben genannten geringen systembedingten Dämpfung sind damit ideale Voraussetzungen für das Entstehen von *Pilot Assisted Oscillations* (PAOs) gegeben.

Speziell im .Fall des Transporthubschraubers CH-53G haben starke Vertikalschwingungen in der Vergangenheit in mehreren Fällen zu Situationen geführt, in denen die Kontrolle über das Fluggerät nur durch den Abwurf der Last wiedererlangt werden konnte. Um den Außenlasttransport sicher und effektiv zu gestalten, müssen Verfahren und Systeme gefunden werden, die die Stabilitätseigenschaften des gekoppelten Systems Hubschrauber/Außenlast verbessern und somit den sicheren Lasttransport gewährleisten.

Die für die Erfindung interessierenden Vertikalschwingungen können auf Grund ihres großen Frequenzabstands getrennt von Pendelschwingungen derselben Außenlast betrachtet werden. Die Eigenfrequenz der Pendelschwingungen liegt in der Größenordung von 1 [rad/s], die der Vertikalschwingungen minimal bei -10 [rad/s]. Die Kontrollierbarkeit und Regelung der neben den Vertikalschwingungen auftretenden Pendelbewegungen sind nicht Gegenstand der vorliegenden Erfindung.

## STAND DER TECHNIK

Es ist eine Reihe von Arbeiten bekannt, in der die Dynamik eines Hubschraubers mit Außenlast betrachtet wird. Der Großteil dieser Arbeiten beschränkt sich allerdings auf die Simulation und die Analyse des Systems, ohne Vorschläge zu dessen Stabilisierung zu machen. Lösungsansätze für das Problem der Vertikalschwingung sind erstmals bei Gabel und Wilson (Test Approaches to External Sling Load Instabilities, 24th Annual National Forum, AHS-230, American Helicopter Society, 1968) zu finden. Das Problem der Vertikalschwingungen speziell beim Transporthubschrauber CH-53G der Bundeswehr wurde vom Bundesamt für Wehrtechnik und Beschaffung bereits Anfang der 80er Jahre untersucht (vgl. Buchacker, E., Flight Test Evaluation of the PIO-behaviour of a Helicopter with Suspended Cargo, AGARD, CP333, Paper 24, Juni 1982).

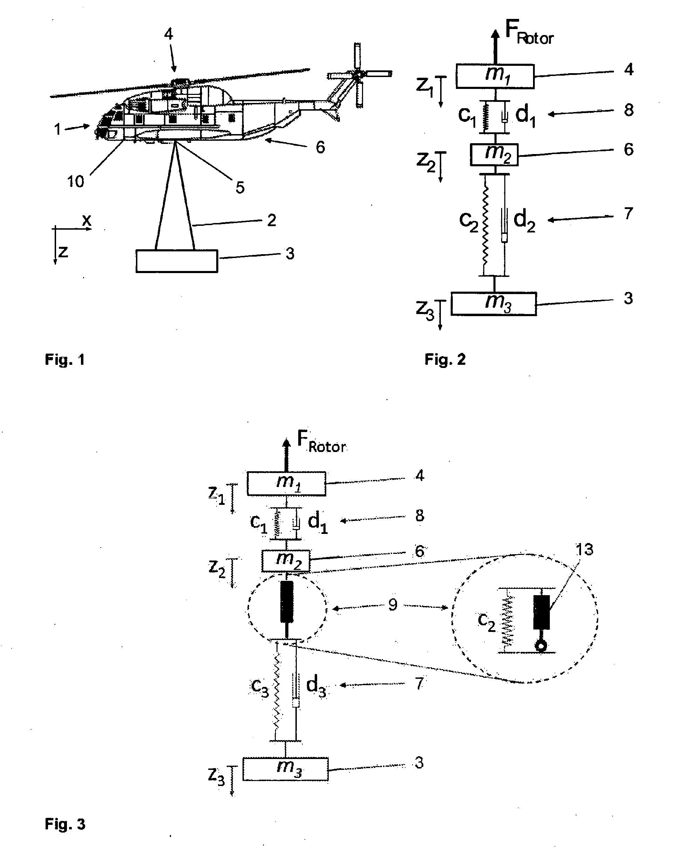

Der Entstehungsmechanismus dieses Effekts lässt sich vereinfachend auf Grundlage des in Fig. 2 gezeigten mechanischen Ersatzmodells, bestehend aus drei durch Federn und Dämpfer verbundenen Massen, erklären.

Das Zusammenfallen der Eigenfrequenz mit einer der im Cockpit des Hubschraubers auftretenden Strukturfrequenzen ist als kritisch zu erachten. In diesem Fall ist durch eine Rückkopplung der Schwingung über Körper und Arm des Piloten auf das Kollektivsteuer (biomechanische Kopplung) eine Anregung des Systems derart möglich, dass eine instabile Schwingung entsteht. Ein solches Schwingungsphänomen wird als Pilot Assisted Oscillations (PAO) bezeichnet. Gängige Lösungsvorschläge haben deshalb das Ziel, diese systembedingte Resonanz zu umgehen. In der Literatur werden folgende Lösungsansätze unterschieden:

**Resonanzvermeidung:**

Unter Resonanzvermeidung ist die gezielte Auswahl von Lastgeschirren hinsichtlich der Eigenfrequenz der Vertikalschwingung zu verstehen. Damit soll erreicht werden, dass die Eigenfrequenz niedriger als die Erregerfrequenz ist. Voraussetzung hierfür ist das Vorhandensein entsprechender Informationen über die Lastgeschirre. Auch eine gezielte Auslegung der Lastgeschirre hinsichtlich ihrer Federeigenschaften ist denkbar.

**Isolator/Dämpfungselement:**

Hierbei wird zwischen Hubschrauber und Lastgeschirr ein weiteres Federelement geschaltet, das aufgrund der Reihenschaltung sicher dafür sorgen kann, dass die Eigenfrequenz einen festgelegten Maximalwert nicht überschreitet und damit stets ein ausreichender Abstand zur Erregerfrequenz gewahrt ist.

**Modifikation der Kollektivsteuerung:**

Das Übertragungsverhalten der Steuerung wird durch Modifikationen des Steuersystems so verändert, dass hochfrequente Eingaben geringer Amplitude am Ausgang unterdrückt werden, normale, flugmechanisch relevante Steuereingaben jedoch unverändert übertragen werden. Eine einfache Variante ist die Erhöhung der Reibung am Kollektivhebel. Die somit erreichte Vergrößerung der Hysteresebreite des Stellglieds ist jedoch mit einer Verringerung der Stabilität verbunden. Das Loslassen des Kollektivhebels bei Auftreten starker Schwingungen verfolgt ein ähnliches Ziel. Es handelt sich dabei jedoch nur um eine Reaktion auf ein bereits aufgetretenes Problem und ist darüber hinaus nicht in jeder Flugsituation durchführbar.

Speziell beim Transport von Außenlasten mit dem Hubschrauber CH-53G der Bundeswehr wird bislang lediglich durch Loslassen der Steuer oder Erhöhung der Kollektivreibung (Reibbremse) versucht, Schwingungen zu tilgen. Lässt sich ein durch die Kopplung von Hubschrauber und Außenlast verursachter kritischer Flugzustand durch Eingriff des Piloten nicht beenden, muss die Außenlast abgeworfen werden. Der Hubschrauber wird durch diese Maßnahme sofort wieder kontrollierbar. Die Anwendung dieses Verfahrens erfordert einen hohen Trainingsgrad und umfangreiche Erfahrung des Piloten im Bereich der Außenlastfliegerei.

Ein Vorrichtung zur Schwingungsisolation / -dämpfung hat die Aufgabe, die Übertragung von Kräften und Schwingungsenergie auf das zu isolierende Objekt zu unterdrücken. Bekannt sind Systeme die entweder passiv oder adaptiv eine Dämpfung oder Isolation bewirken.

Passive Systeme kommen vollständig ohne Energiezufuhr und Signalverarbeitung aus. Die Systemkomponenten, Feder- und/oder Dämpferelemente, können lediglich Energie speichern oder dissipleren. Das dynamische Verhalten des Systems wird lediglich durch den Austausch von Komponenten beeinflusst. Zu den passiven Systemen werden auch Systeme gezählt, bei denen die Anbindung des zu isolierenden Systems in den natürlichen Schwingungsknoten des anregenden Systems geschieht. Diese Methode wird z.B. bei der Schwingungsisolation von Hubschrauberzellen eingesetzt. Möglich ist mit solchen Systemen jedoch nur die Unterdrückung ganz bestimmter Frequenzen bzw. schmaler Frequenzbänder. Es eignet sich also nur, wenn die Anregung wiederholt in der gleichen, definierten Frequenz erfolgt (z.B. stationärer Arbeitspunkt, Betriebspunkt), und das anregende System im Betrieb keinen Veränderungen (unterschiedliche Massenverteilung etc.) unterworfen ist. Zusätzlich besteht die Gefahr, dass passive Systeme für die jeweiligen Anforderungen nicht genügend Energie dissipieren.

Ein Verfahren und eine Vorrichtung zur Dämpfung von Vertikalschwingungen bei einem Hubschrauber mit angehängter Außenlast mit den Merkmalen des Oberbegriffs des unabhängigen Patentanspruchs 1 bzw. 7 kann man darin sehen, dass ein zwischen dem Lastaufnahmepunkt und dem Lastgeschirr parallel zu einer Tragfeder angeordneter passiver Dämpfer Gegenkräfte zu den dort wirkenden Vertikalschwingungen aufbringt.

Bei adaptiven Systemen werden die Eigenschaften der passiven Elemente durch eine - meist manuelle - Steuerung verändert. Der Energiebedarf beschränkt sich auf die Verstellung der Elementeigenschaften. Die Eingriffshäufigkeit ist im Vergleich zur Anregungsfrequenz sehr gering und somit unflexibel.

Eine kontinuierliche Veränderung der Eigenschaften der passiven Systemelemente mittels eines Regelkreises ist charakteristisch für ein semiaktives System. Ein Energieaustausch mit dem schwingenden System findet nicht statt. Der Energiebedarf umfasst lediglich die Verstellung und die Signalverarbeitung.

Allen oben genannten Lösungsansätzen ist gemein, dass sie nicht die Anfälligkeit des Systems für Vertikalschwingungen reduzieren, sondern dadurch lediglich kritische Anregungen vermieden werden sollen; es erfolgt keine Erhöhung der Dämpfung kritischer Eigenschwingungen, sondern ausschließlich deren Verschiebung hin zu anderen Frequenzen. Eine potentielle Gefahr zur Schwingungsanregung besteht somit weiterhin. Auch können die Systeme nur für eine begrenzte Anzahl diskreter Frequenzen, bzw. einen kleinen Frequenzbereich ausgelegt werden oder sie fordern ein hohes Maß an Training und Erfahrung mit der Außenlastfliegerei.

Der tatsächliche Außenlasttransport ist jedoch durch eine Vielzahl von Variationen der Konfiguration gekennzeichnet (z.B. Hubschrauber und Lastmassen, verwendetes Lastgeschirr, Pilotensteuerstrategie, etc.). Dadurch werden die Eigenfrequenzen des Gesamtsystems, die vor allem von den Massenverteilungen abhängig sind, verschoben. Systemen zur Resonanzvermeidung für diskrete Frequenzen sind somit nicht universell einsetzbar.

Aktive Dämpfungssysteme, mit denen aktiv Gegenkräfte zu Schwingungen erzeugt werden, um Schwingungen oder Vibrationen einer Struktur zu unterdrücken, sind grundsätzlich bekannt. Die bekannten Prinzipien sind jedoch nicht ohne weiteres auf das Dämpfen von Vertikalschwingungen bei einem Hubschrauber mit angehängter Außenlast übertragbar. Hierzu fehlt es bereits an einem festen Bezugssystem. Ein Hubschrauber ist im Flug an seinem Rotor, d. h.

einem frei schwebenden und gedämpften Schuberzeuger und nicht an irgendeinem Fixpunkt aufgehängt. Zudem wäre beim Lasttransport mit häufig wechselnden Lasten mit Hilfe ebenfalls wechselnder Lastgeschirre die Gewinnung von Schwingungsinformationen an der Außenlast sehr aufwändig.

So sind aus der DE 10 2005 022 212 A1, aus der dortigen Beschreibung des Stands der Technik zwar ein aktives Verfahren mit den Merkmalen des Oberbegriffs des unabhängigen Patentanspruchs 1 und einer aktiven Vorrichtung mit den Merkmalen des Oberbegriffs des unabhängigen Patentanspruchs 7 bekannt, bei denen ein aktives Dämpfungsglied mit einem Seil, mit dem eine Last an einen Hubschrauber angehängt ist, in Reihe geschaltet ist, um Schwingungen in der Richtung des Abstands zwischen dem Hubschrauber und der angehängten Last zu reduzieren. Es wird aber auf die Schwierigkeit verwiesen, hierfür ein Eingangssignal zu gewinnen, und die in dieser Druckschrift beschriebene Erfindung ist keine aktive Dämpfungsmaßnahme sondern ein Verfahren zur Darstellung des Bewegungszustands der an den Hubschrauber angehängten Last, um den Piloten des Hubschraubers intuitiv zu dämpfenden Eingriffen zu veranlassen.

Die DE 690 15 572 T2 offenbart eine Vorrichtung zur aktiven Dämpfung von Schwingungen und spricht dabei die Möglichkeit an, die Signale von Schwingungssensoren frequenzselektiv unter Berücksichtigung einer Grundfrequenz auszuwerten.

Aus der DE 694 30 264 T2 ist es bekannt eine Vibrations-Messanordnung mit sechs Beschleunigungsmessern, um Vibration in allen sechs Freiheitsgraden zu messen, in dem Passagierabteil eines Helikopters anzuordnen, um durch aktive Schwingungsdämpfung den Helikopter-Passagieren einen vibrationsfreien Flug bereitzustellen.

Dokument US 3 904 156 offenbart eine Vorrichtung zum Dämpfen von Pendelschwingungen eines Lastgeschirrs eines Hubschraubers.

## AUFGABE DER ERFINDUNG

Der Erfindung liegt die Aufgabe zugrunde, ein Verfahren und eine Vorrichtung zur Dämpfung von Vertikalschwingungen bei einem Hubschrauber mit angehängter Außenlast mit den Merkmalen des Oberbegriffs des unabhängigen Patentanspruchs 1 bzw. 7 aufzuzeigen, die mit begrenztem Aufwand apparativem und Energieaufwand über die im Lasttransport auftretenden Variationen der Konfiguration hinweg zu einem hohen maß an Dämpfung relevanter Vertikalschwingungen in der Lage sind.

## LÖSUNG

Die Aufgabe der Erfindung wird erfindungsgemäß durch ein Verfahren mit den Merkmalen des unabhängigen Patentanspruchs 1 und eine Vorrichtung mit den Merkmalen des unabhängigen Patentanspruchs 7 gelöst. Die abhängigen Patentansprüche definieren bevorzugte Ausführungsformen des neuen Verfahrens und der neuen Vorrichtung.

## BESCHREIBUNG DER ERFINDUNG

Bei dem neuen Verfahren zum Dämpfen von Vertikalschwingungen bei einem eine Rotorantriebseinheit und eine Hubschrauberzelle aufweisenden Hubschrauber mit einer über ein Lastgeschirr an einen Lastaufnahmepunkt der Hubschrauberzelle angehängten Außenlast werden mit Schwingungssensoren an dem Hubschrauber zumindest die Anregungen einer ersten Eigenform der Vertikalschwingungen erfasst wird, bei der die Außenlast und die Rotorantriebseinheit gemeinsam gegenüber dem Lastaufnahmepunkt schwingen, und einer zweiten Eigenform der Vertikalschwingungen erfasst wird, bei der der Lastaufnahmepunkt gegenüber der Außenlast und der Rotorantriebseinheit schwingt, erfasst und die Gegenkräfte zu den Vertikalschwingungen abhängig von Phase und Amplitude der erfassten Anregungen zwischen dem Lastaufnahmepunkt und dem Lastgeschirr mit einem aktiv angesteuerten Linearaktuator eingeleitet..

Überraschender Weise stellt sich heraus, dass es ausreichend ist, Schwingungssensoren an dem Hubschrauber selbst anzubringen, um die Anregungen der für die Sicherheit des Hubschraubers wesentlichen Eigenformen der Vertikalschwingungen zu erfassen. Diesen Vertikalschwingungen kann mit einem einfachen Linearaktuator zwischen dem Lastaufnahmepunkt des Hubschraubers und dem Lastgeschirr aktiv entgegengewirkt werden, indem der Linearaktuator zur Erzeugung von Kräften zwischen dem Lastaufnahmepunkt und dem Lastgeschirr angesteuert wird. Dabei resultiert aus der Fokussierung auf die zwei wesentlichen Eigenformen der Vertikalschwingungen, dass die Anforderungen an den Linearaktuator mit handelsüblichen Linearaktuatoren zu erfüllen sind und auch die Energieversorgung des Linearaktuators aus dem an Bord eines Hubschraubers vorliegenden Versorgungsnetz kein Problem darstellt.

Grundsätzlich ist der Energiebedarf eines aktiven Dämpfungssystems im Vergleich zu allen passiven und adaptiven Systemen hoch, da durch die gegenphasige Ansteuerung des Linearaktuators dem System gezielt Energie zugeführt wird. Indem diese Energiezufuhr auf die beiden wesentlichen Eigenformen der Vertikalschwingungen fokussiert wird, kann die mit einem aktiven Dämpfungssystem erreichbare höhere Isolations- bzw. Dämpfungsgüte als bei einem passiven oder adaptiven System ohne einen übermäßigen Energieeinsatz erreicht werden.

Die Fokussierung des neuen Verfahrens auf bestimmte Eigenformen erweist sich als ausgesprochen flexibel gegenüber variierenden Konfigurationen durch unterschiedliche Außenlasten, Lastgeschirre und auch unterschiedliche Betankungs- und Beladungszustände des Hubschraubers selbst. Diese unterschiedlichen Konfigurationen resultieren in unterschiedliche Eigenfrequenzen der Eigenformen. Diesen Frequenzverschiebungen folgt das neue Verfahren unmittelbar.

Bei dem neuen Verfahren ist als eine relevante Eigenform der Vertikalschwingungen diejenige Eigenform zu berücksichtigen, bei der die Außenlast und die Rotorantriebseinheit gemeinsam gegenüber dem Lastaufnahmepunkt schwingen. Die Eigenfrequenz dieser Eigenform liegt typischerweise in einem Bereich von 10 bis 30 rad/s, wobei sich jede Angabe in der Einheit rad/s in eine Angabe in der Einheit Hz umrechnen lässt, indem durch $2\pi$ geteilt wird.

Bei einer anderen, bei dem neuen Verfahren zu berücksichtigenden wesentlichen Eigenform schwingt der Lastaufnahmepunkt gegenüber der Außenlast und der Rotorantriebseinheit. Die zugehörige Eigenfrequenz liegt typischerweise in einem Bereich zwischen 30 und 60 rad/s.

Während Verschiebungen der genannten Eigenfrequenzen aufgrund unterschiedlicher Konfigurationen der Außenlast, des Lastgeschirrs und des Beladungszustands des Hubschraubers selbst auftreten, die eine Dämpfung der Vertikalschwingungen mit passiven Maßnahmen unmöglich machen, überdecken diese Verschiebungen keinen Bereich, der für eine aktive Dämpfung ein Problem darstellen würde. Auch der von beiden Eigenfrequenzen gemeinsam überspannte Frequenzbereich ist für eine aktive Dämpfung noch vergleichsweise klein, wodurch an den Arbeitsbereich des Linearaktuators im Frequenzraum in vorteilhafter Weise begrenzte Anforderungen gestellt werden.

Um die beiden genannten Eigenformen erfassen zu können, können Schwingungssensoren einerseits an der Rotorantriebseinheit und andererseits an dem Lastaufnahmepunkt oder einem Boden der Hubschrauberzelle angeordnet werden. Dabei erweist sich ein Anbringungspunkt an der Rotorantriebseinheit als günstig, da er gut zugänglich ist und trotzdem nahe an dem Rotor selbst liegt. Besonders gut geeignet ist beispielsweise das Rotorgetriebe. Durch Erfassen von Anregungen der anderen Eigenform am Boden der Hubschrauberzelle kann der eigentliche Lastaufhängepunkt von den Schwingungssensoren freigehalten werden. Auch für die Schwingungssensoren ist es vorteilhaft, dass die Eigenfrequenzen der interessierenden, Eigenformen nur über einen begrenzten Bereich variieren. Auch ihr Arbeitsbereich im Frequenzraum kann daher auf diesen Bereich begrenzt werden.

Insbesondere ist es möglich, die Anregung je Eigenform der Vertikalschwingungen mit nur einem einzigen Schwingungssensor an dem Hubschrauber zu erfassen. Das neue Verfahren kann entsprechend mit nur zwei Schwingungssensoren an dem Hubschrauber durchgeführt werden.

Der Linearaktuator wird bei dem neuen Verfahren in an sich für ein aktives Dämpfungssystem ungewöhnlicher Reihenschaltung mit dem Lastgeschirr zwischen dem Hubschrauber und der Außenlast angeordnet. Ein zusätzlich in Reihe geschalteter Dämpfer verringert grundsätzlich die gesamte Dämpfung eines Systems. Auch aktive Dämpfer werden gewöhnlich in Parallelschaltung mit Abstützung an beiden gegeneinander schwingenden Massen angeordnet. Dies ist bei einem Hubschrauber mit angehängter Außenlast nicht sinnvoll möglich. Aufgrund seiner aktiven Ansteuerung ist der Linearaktuator dennoch in der Lage, die interessierenden Vertikalschwingungen aktiv zu dämpfen. Um mit der Ansteuerung des Vertikalaktuators direkt Kräfte zwischen dem Lastaufnahmepunkt und dem Lastgeschirr auszuüben, können statische Kräfte dazwischen durch eine dem Linearaktuator selbst parallele geschaltete Abstützfeder an dem Hubschrauber abgestützt werden. Auch im Fall einer solchen Abstützfeder bleibt der Linearaktuator bzw. seine Kombination mit der Abstützfeder mit dem Traggeschirr in Reihe geschaltet.

Die neue Vorrichtung zum Dämpfen von Vertikalschwingungen bei einem Hubschrauber mit angehängter Außenlast wurde bereits durch die Erläuterung des neuen Verfahrens weitgehend beschrieben. Es ist noch darauf hinzuweisen, dass die Schwingungssensoren der neuen Vorrichtung vorzugsweise Beschleunigungsaufnehmer aufweisen und dass der Linearaktuator einen elektromotorischen oder hydraulischen Antrieb aufweisen kann, wobei die Antriebsart bevorzugt ist, die aus einer an Bord des Hubschraubers vorhandenen Quelle versorgt werden kann. In aller Regel ist eine Stromversorgung vorhanden. Dann ist ein elektromotorischer Antrieb bevorzugt. Dabei ist es ein besonderer Vorteil der vorliegenden Erfindung, dass die Anforderungen an einen derartigen elektromotorischen Antrieb durch handelsübliche Linearaktuatoren erfüllt werden können. Ein im Folgenden noch detailliert beschrieben werdender Auslegungsfall resultierte in eine dynamische Maximalauslenkung von +/- 30 mm, eine maximale Frequenz von 10 Hz, eine dynamische Variation der Last von +/-12 kN und eine maximale Leistungsaufnahme von 15 kW. Dieses Anforderungsprofil wird sowohl von handelsüblichern Linearaktuatoren als auch hinsichtlich der Leistungsversorgung von der Elektrik eines entsprechenden großen Transporthubschraubers ohne weiteres erfüllt.

Der Hauptvorteil der vorliegenden Erfindung gegenüber bisherigen Maßnahmen zur Dämpfung von Vertikalschwingungen eines Hubschraubers mit einer angehängten Last besteht darin, dass die relevanten Vertikalschwingungen über den gesamten Anregungsbereich auch dann vermieden werden, wenn eine große Parametervariation bezüglich der Hubschrauber- und Lastmasse sowie der Lastgeschirrsteifigkeit auftritt. Insbesondere ist diese vollständige Dämpfung der Vertikalschwingungen unabhängig vom Erfahrungs- und Trainingszustand des Piloten des jeweiligen Hubschraubers. Rückkopplungen und gegenseitig verursachte Resonanzen zwischen Hubschrauber und Pilot werden grundsätzlich vermieden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

## KURZBESCHREIBUNG DER FIGUREN

Im Folgenden wird die Erfindung anhand in den Figuren dargestellter bevorzugter Ausführungsbeispiele weiter erläutert und beschrieben.

**Fig. 1**      zeigt einen Hubschrauber mit angehängter Außenlast.

**Fig. 2**      zeigt ein offenes Ersatzsystem für den Hubschrauber mit angehängter Außenlast aus Fig. 1.

**Fig. 3**      zeigt das Ersatzsystem aus Fig. 2 mit integriertem aktiven Dämpfungssystem.

**Fig. 4**      zeigt Eigenwertbereiche des offenen Ersatzsystems aus Fig. 2.

**Fig. 8**      zeigt Amplitudengänge einer hochpassgefilterten Führungsgröße ($2\ddot{z}_1 + \ddot{z}_2$) des offenen Ersatzsystems aus Fig. 2.

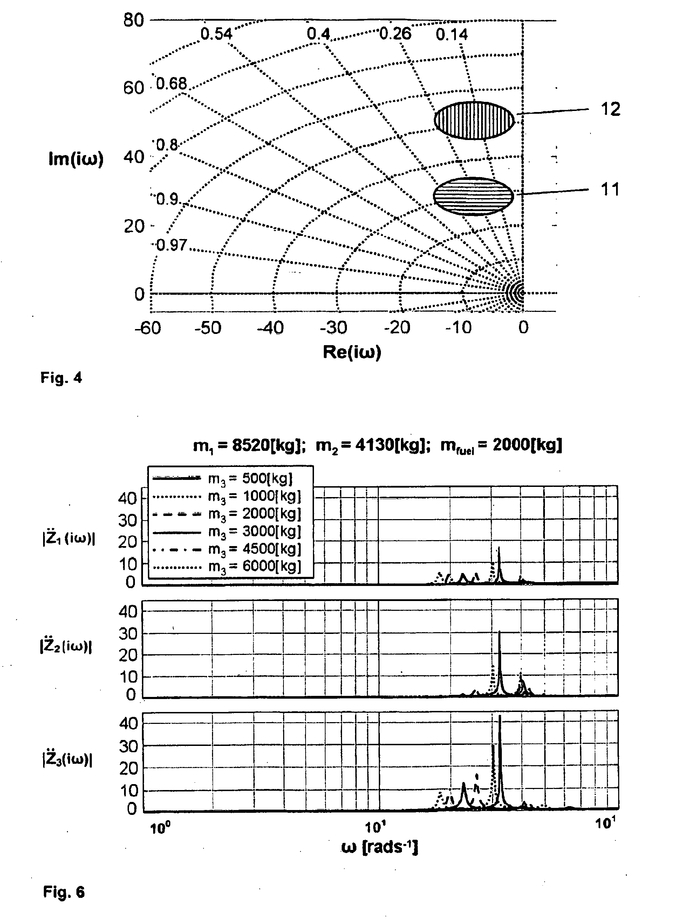

**Fig. 6**      zeigt die Amplituden der Beschleunigungen der Freiheitsgrade $z_1$. $z_2$ und $z_3$ des offenen Ersatzsystems aus Fig. 2 über das Anregungsspektrum im Kollektivsteuer für einen Referenzfall.

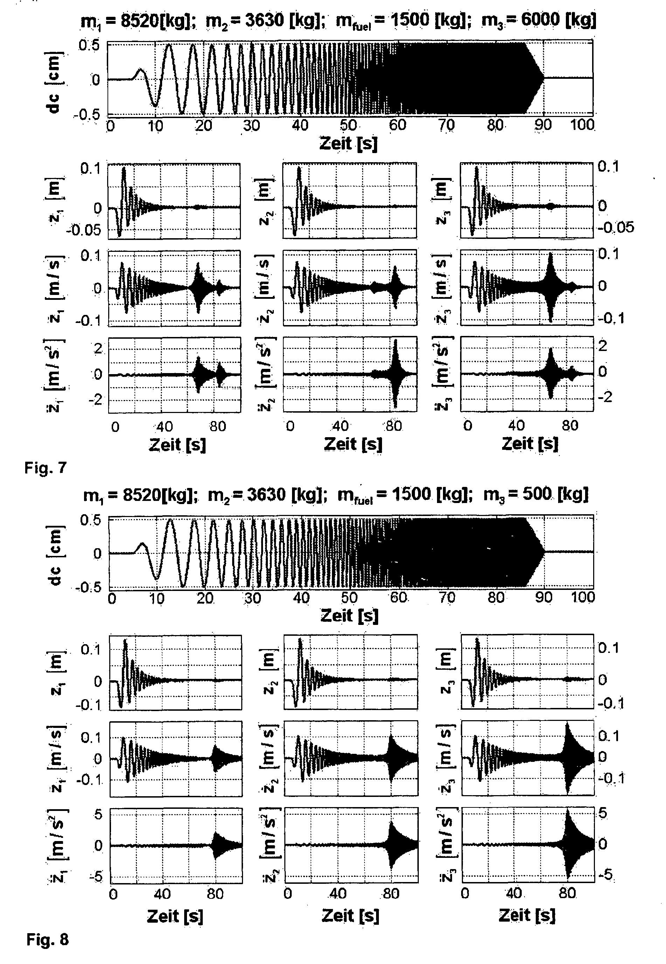

**Fig. 7**      zeigt Zeitverläufe der Positionen, Geschwindigkeiten und Beschleunigungen bei dem offenen Ersatzsystems aus Fig. 2 infolge eines Frequenz-Sweeps am Steuer bei schwerer Außenlast.

**Fig. 8**      zeigt Zeitverläufe der Positionen, Geschwindigkeiten und Beschleunigungen bei dem offenen Ersatzsystems aus Fig. 2 infolge eines Frequenz-Sweeps am Steuer bei leichter Außenlast.

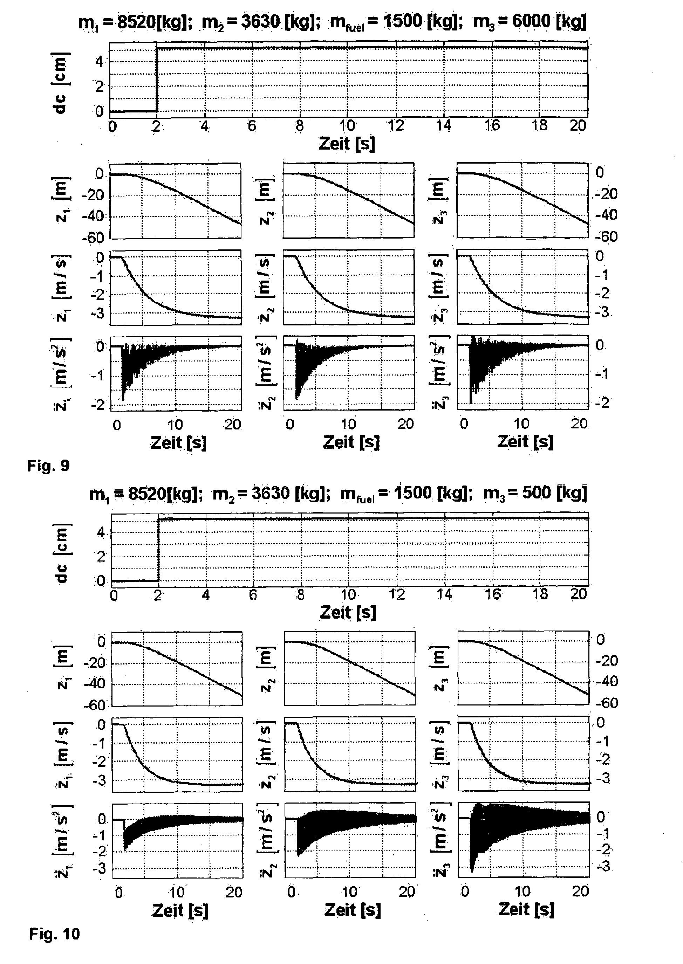

**Fig. 9.**      zeigt Sprungantworten der Positionen, Geschwindigkeiten und Beschleunigungen bei dem offenen Ersatzsystems aus Fig. 2 und schwerer Außenlast.

**Fig. 10**      zeigt Sprungantworten der Positionen, Geschwindigkeiten und Beschleunigungen bei dem offenen Ersatzsystems aus Fig. 2 und leichter Außenlast.

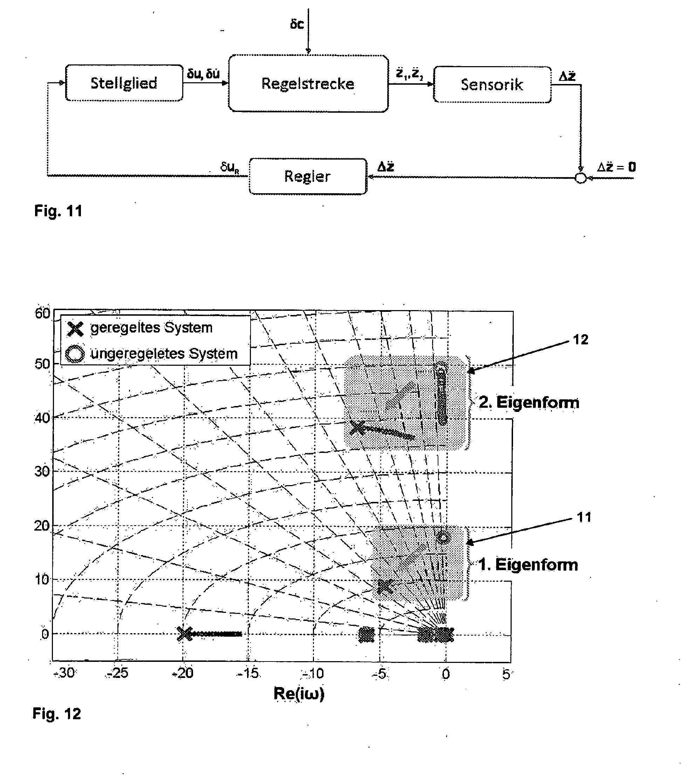

**Fig. 11**      illustriert die Struktur eines Regelkreises für das aktive Dämpfungssystem aus Fig. 3.

**Fig. 12**      zeigt die Polverteilung unter $m_{Fuel}$-Variation von 300-2000 [kg] mit und ohne aktives Dämpfungssystem.

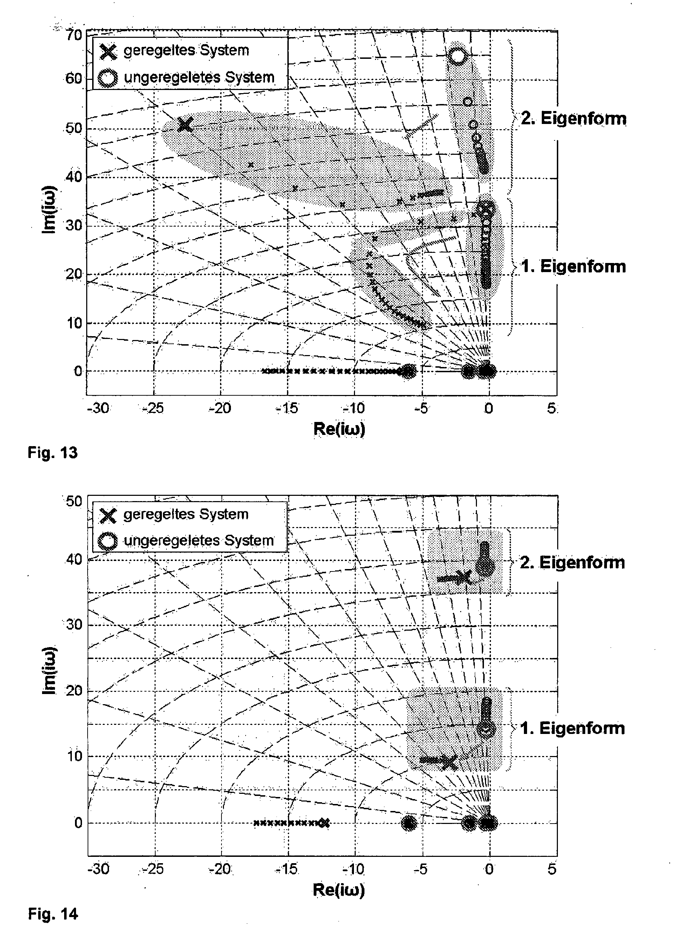

**Fig. 13**      zeigt die Polverteilung unter $m_3$-Variation von 500-6000 [kg] mit und ohne aktives Dämpfungssystem.

**Fig. 14**      zeigt die Polverteilung unter $c_3$-Variation von $0.9\text{-}1.9\ 10^6$ [N/m] mit und ohne aktives Dämpfungssystem.

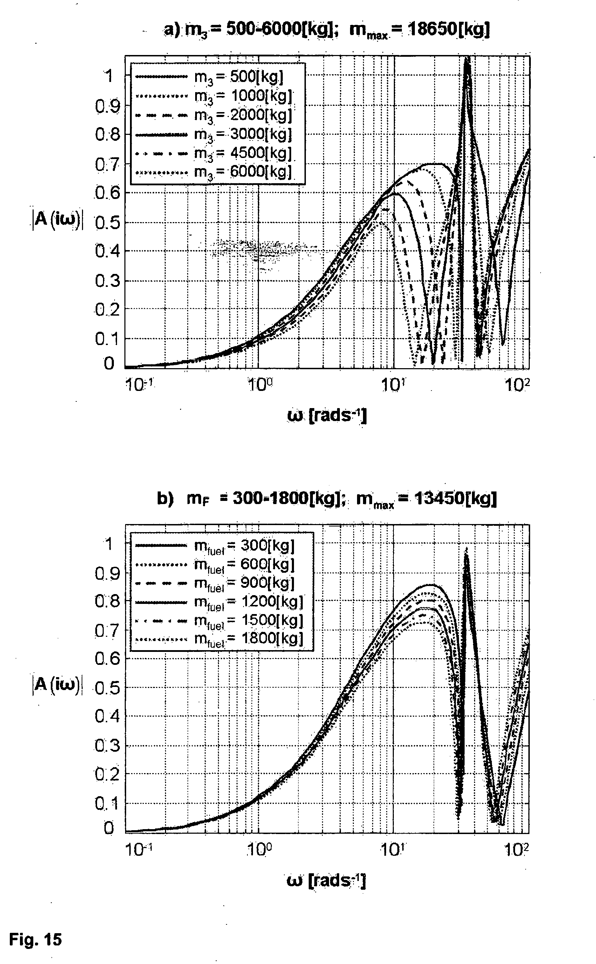

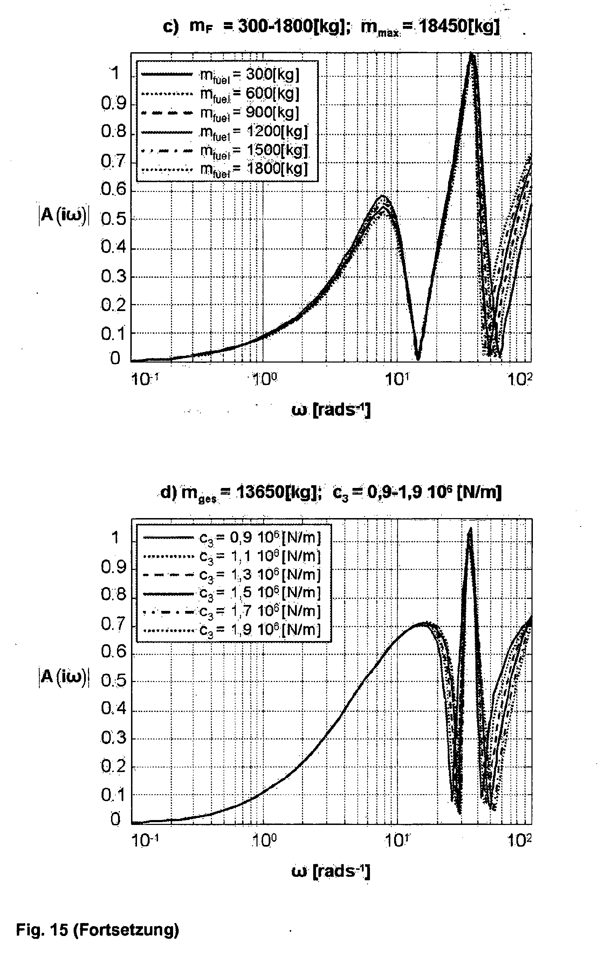

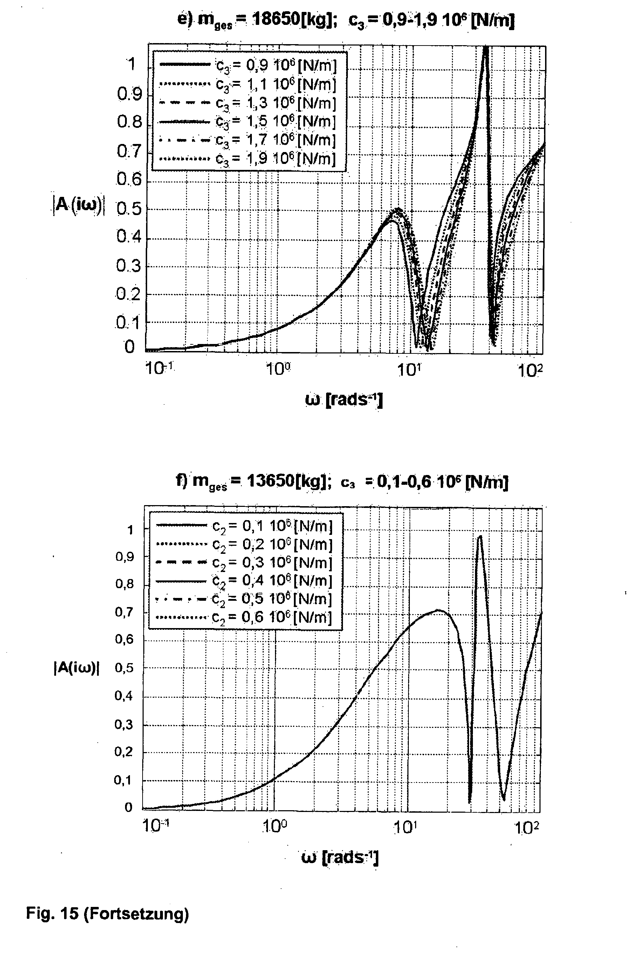

**Fig. 15**      zeigt Amplitudengänge einer hochpassgefilterten Führungsgröße ($2\ddot{z}_1+\ddot{z}_2$) des geschlossenen Ersatzsystems aus Fig. 3.

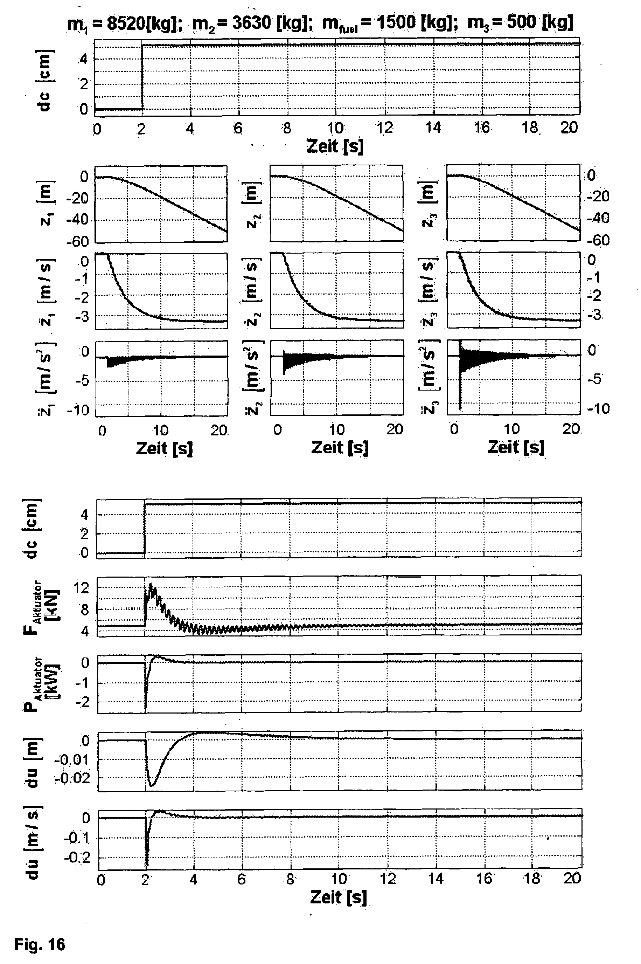

**Fig. 16**      zeigt Sprungantworten der Positionen, Geschwindigkeiten und Beschleunigungen bei dem geschlossenen Ersatzsystems aus Fig. 3 und leichter Außenlast.

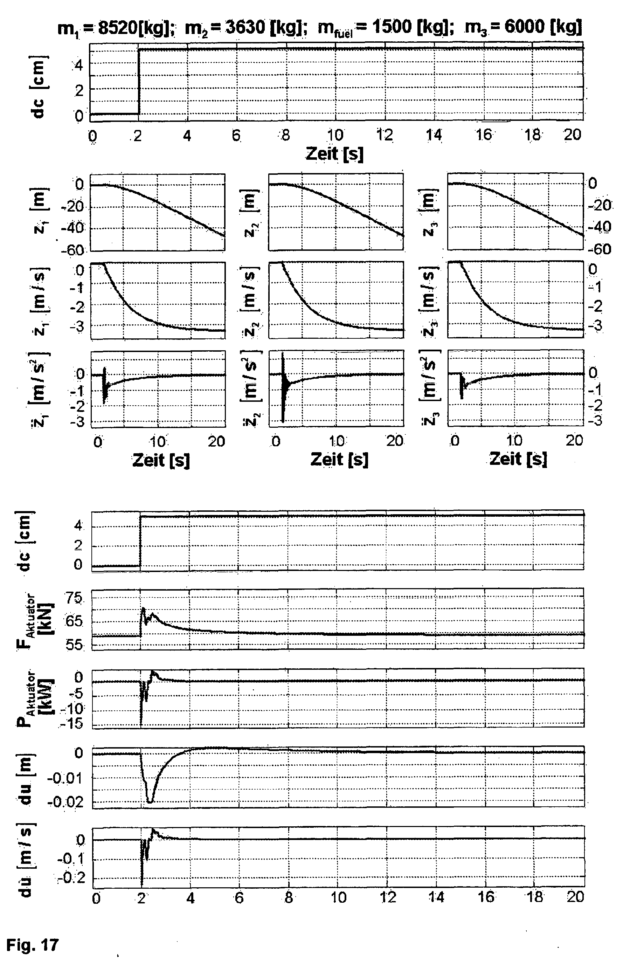

**Fig. 17**      zeigt Sprungantworten der Positionen, Geschwindigkeiten und Beschleunigungen bei dem geschlossenen Ersatzsystems aus Fig. 3 und schwerer Außenlast.

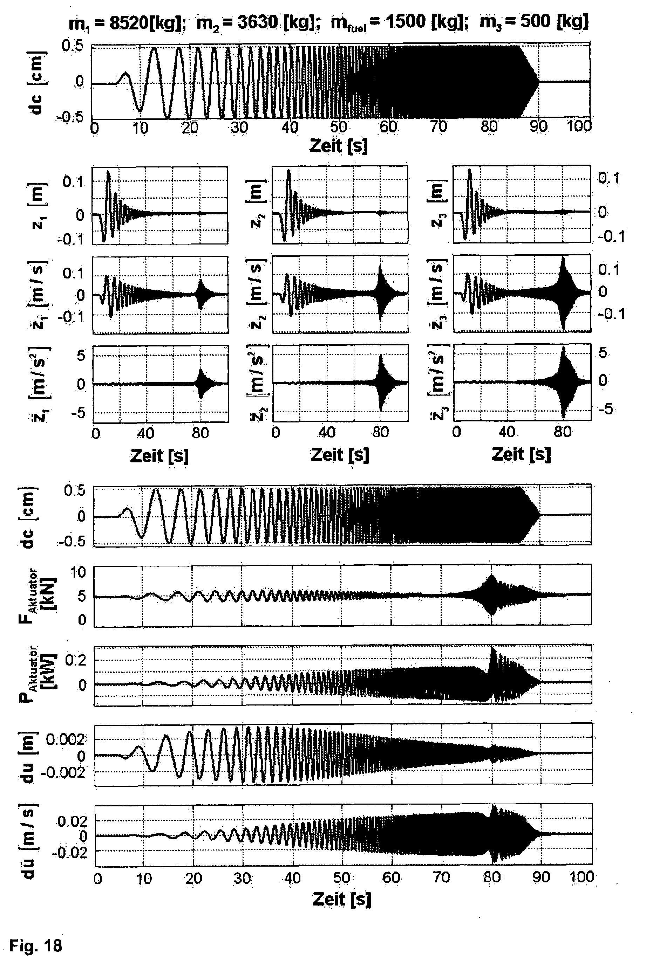

**Fig. 18** zeigt Zeitverläufe der Positionen, Geschwindigkeiten und Beschleunigungen bei dem geschlossenen Ersatzsystems aus Fig. 3 infolge eines Frequenz-Sweeps am Steuer bei leichter Außenlast; und

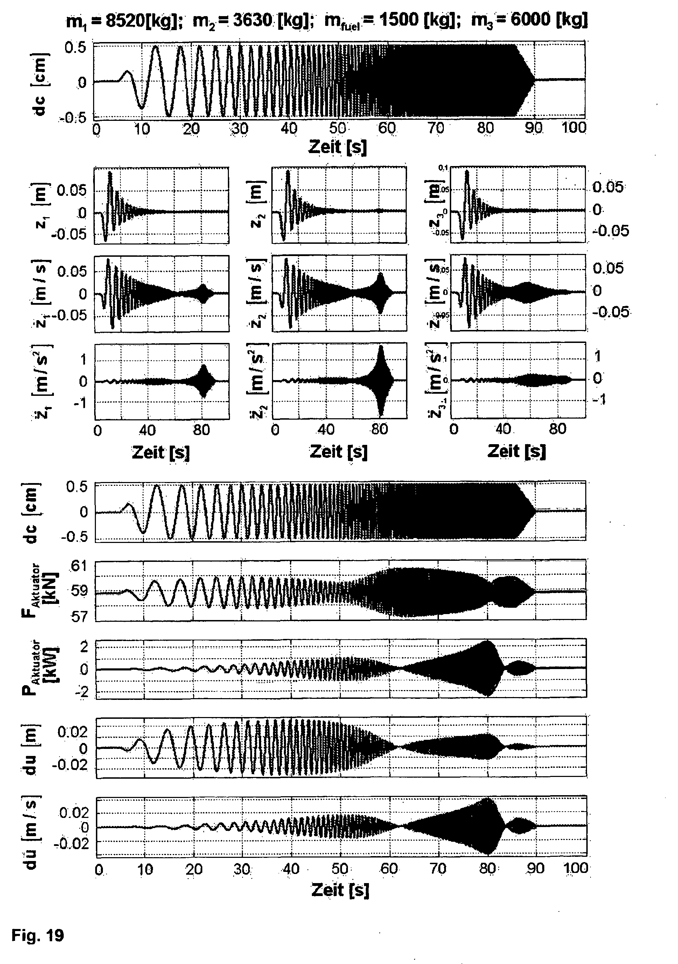

**Fig. 19** zeigt Zeitverläufe der Positionen, Geschwindigkeiten und Beschleunigungen bei dem geschlossenen Ersatzsystems aus Fig. 3 infolge eines Frequenz-Sweeps am Steuer bei schwerer Außenlast.

## FIGURENBESCHREIBUNG

**Fig. 1** zeigt einen Hubschrauber 1 an den über ein Lastgeschirr 2 einen Außenlast 3 angehängt ist. Der Hubschrauber 3 ist im Flug frei schwebend und gedämpft an seiner Rotorantriebseinheit 4 aufgehängt. Das Lastgeschirr 2 ist an der Hubschrauberzelle 6 in einem Lastabstützungspunkt 5 abgestützt, der sich am oder nahe des Bodens 10 der Hubschrauberzelle 6 befindet. Dort sind auch hier nicht näher hervorgehobene Treibstofftanks des Hubschraubers 1 abgestützt.

**Fig. 2** zeigt ein offenes Ersatzsystem für den Hubschrauber 1 mit angehängter Außenlast 3 gemäß Fig. 1, das neben den Massen $m_1$ der Rotorantriebseinheit 4, $m_2$ der Hubschrauberzelle 6 und $m_3$ der Außenlast 3 die Steifigkeiten und Dämpfungen $c_1$ und $d_1$ bzw. $c_3$ und $d_3$ zwischen der Rotorantriebseinheit 4 und der Hubschrauberzelle 6 bzw. zwischen der Hubschrauberzelle 6 und der Außenlast 3 berücksichtigt.

**Fig. 3** zeigt das Ersatzsystem aus Fig. 2 mit zusätzlichem integriertem aktivem Dämpfungssystem 9, das aus einem Linearaktuator 13 und einer dazu parallel geschalteten Abstützfeder $c_2$ aufgebaut ist. Das aktive Dämpfungssystem 9 ist zwischen den Lastabstützpunkt 5 und das Lastgeschirr 2 gemäß Fig. 1 geschaltet und wirkt dementsprechend zwischen der Masse $m_2$ und der Masse $m_3$ in Reihe mit der Steifigkeit $c_3$ und der Dämpfung $d_3$. Die Abstützfeder $c_2$ trägt die statische Last der Außenlast 3 zwischen dem Lastabstützungspunkt 5 und dem Lastgeschirr 2. Der Linearaktuator 13 dient dazu, dynamische Kräfte zwischen dem Lastabstützungspunkt 5 und dem Lastgeschirr 2 einzuleiten, mit denen Vertikalschwingungen des Hubschraubers 1 mit der angehängten Außenlast 3 aktiv entgegengewirkt wird. Dies erfolgt in Abhängigkeit von Schwingungssensoren, die ausschließlich an dem Hubschrauber 1 angeordnet sind.

## Auslegungsbeispiel

In den nachfolgenden Rechnungen werden Annahmen zur Steifigkeit und zum Dämpfungsmaß der Hubschrauberzelle getroffen sowie die Steifigkeit des Transportseils abgeschätzt. Darüber hinaus wurden die Massen des Ersatzmodells bestimmt (vgl. Fig. 2 und 3). Die Eigenfrequenzen der Hubschrauberzelle, wurden anhand eines praktischen Beispiels (u. a. Videoaufzeichnung einer Heckauslegerschwingung) verifiziert.

**Tabelle 1: Parameterannahmen des Ersatzsystems**

| | | | |
|---|---|---|---|
| MTOW | maximum take off weight | 19050 | [kg] |
| OWE | operating weight empty (ohne Treibstoff) | 10650 | [kg] |
| $\Omega$ | Hauptrotordrehfrequenz | 3,2 | [Hz] |
| n | Blattzahl | 6 | [-] |
| $m_F$ | Treibstoffmasse | max. 2000 | [kg] |
| $m_1$ | Getriebe und Turbinen | 8/10 OWE | [kg] |
| $m_2$ | Zellenboden und Tanks | 2/10 OWE | [kg] |
| $m_3$ | Außenlast | max. 5500 (7255 kg bei Teilbetankung) | [kg] |
| $D_1$ | Dämpfungsmaß der Hubschrauberzelle | 0.1 | [-] |
| $\omega_1$ | Eigenfrequenzen der Hubschrauberzelle | (30, 60) | [rad/s] |
| $c_1$ | Steifigkeit der Hubschrauberzelle | $c_1 = \omega_1^2 \cdot (m_1 + m_2)$ | [N/m] |
| $c_2$ | Steifigkeit der Feder, die die statische Außenlast abstützt | 250000 | [N/m] |
| $c_3$ | Steifigkeit des Transportseils | 900000 -1900000 | [N/m] |
| $D_3$ | Dämpfungsmaß des Tragseils | 0.01 | [-] |

(fortgesetzt)

| | | | | |
|---|---|---|---|---|
| $\left(\dfrac{dZ}{d\dot{z}_1}\right)$ | aerodynamisches Derivativ der Vertikalgeschwindigkeit des Hubschraubers im Schwebeflug | | -4730 | [kg/s] |
| $\left(\dfrac{dZ}{d\delta c}\right)$ | aerodynamisches Derivativ des Vertikalsteuers (Kollektivsteuer öc) des Hubschraubers im Schwebeflug | | -12162 | [kg m/s$^2$cm] |

In der folgenden Beispielrechnung wird basierend auf einem vereinfachten und linearisierten System die prinzipielle Funktionsfähigkeit eines aktiven Dämpfungssystems für Hubschrauberaußenlasten dargestellt. Das aktive System wirkt am Lasthaken, zwischen Hubschrauber und Außenlast. Die Dynamik der Zelle, des Rotors und der Außenlast mit Seilgeschirr, sowie die biomechanische Rückkopplung des Piloten werden zu einem Feder-Dämpfer-System reduziert (vgl. Fig. 1 und Fig. 3). Das Potential einer aktiven Dämpfung wird damit exemplarisch dargestellt.

Es werden Kennwerte für das Lastgeschirr sowie den Hubschrauber (CH-53G) beschreibende aerodynamische Beiwerte angenommen. Alle zur Berechnung des Regelungsverfahrens notwendigen Größen wurden aus Messdaten entnommen oder aus Kennwerten berechnet.

Im Folgenden wird zunächst der Anregungsmechanismus erläutert, der zu Resonanzschwingungen führt. Anschließend wird das ungeregelte Gesamtsystem entsprechend Fig. 1 hinsichtlich Parametervariationen analysiert, um eine klare Vorstellung der Problembereiche zu bekommen. In einem nächsten Punkt wird die Regelungsstruktur und Reglerauslegung erläutert sowie die Spezifikationen für ein aktives Dämpfungsglied diskutiert. Die Robustheit bezüglich Parametervariationen wird nachgewiesen. Schließlich werden konkrete Anforderungen an ein potentielles Stellglied formuliert.

### Anregungsmechanismus:

Das Frequenzspektrum der Anregung setzt sich im Wesentlichen aus der Rotordrehfrequenz und den Vielfachen der Blattfrequenz (Rotordrehfrequenz mal Blattzahl = Blattzahlharmonische) zusammen. Die Intensität nimmt mit steigender Frequenz jedoch schnell ab. Dies liegt daran, dass der Rotor wie ein Frequenzfilter wirkt, und harmonische Schwankungen der Blattkräfte nur für Vielfache der Blattfrequenz überträgt. Diese Frequenzen können zu einer Vielzahl von Strukturschwingungsfrequenzen führen. Fällt eine dieser Frequenz mit den Eigenfrequenzen des gekoppelten Hubschrauber-Außenlast-Systems zusammen, kann es zu starken Resonanzen führen, u. U. verstärkt durch eine biomechanische Rückkopplung über den Piloten ins Kollektivsteuer (Pilot Assisted Oscillations = PAO).

Steuereingaben können ebenfalls zu einer Anregung des gekoppelten Hubschrauber-Außenlast- Systems führen. Diese sind in einem weiten Frequenzbereich möglich. So traten im Flugbetrieb bei der Bundeswehr Schwingungszustände als Folge von abrupten Steuereingaben der Piloten auf, in deren Folge die Außenlast abgeworfen werden musste (Pilot Induced Oscillations = PIO),

Durch das Zwischenschalten eines aktiven und geregelten Dämpfungsgliedes zwischen das System Hubschrauber und das System Außenlast, werden alle über den gesamten Frequenzbereich möglichen Schwingungen voneinander entkoppelt. Im System Hubschrauber erzeugte Schwingungen gelangen somit nicht bis ins System Außenlast, und Außenlastschwingungen haben keine negative Wirkung auf das System Hubschrauber. Rückkopplungen und gegenseitig verursachte Resonanzen werden verhindert. Vom Piloten angeregte Schwingungen (PIO, PAO) und Schwingungen infolge Luft- und Massenkräfte werden gedämpft. Ein sicherer Flug in allen Flugzuständen ist die Folge.

### Systemmodellierung und analyse ohne aktives Dämnfungssystem (ADS)

Für die Analyse des Systems werden der Problemstellung angemessene mathematische Modelle für die verschiedenen Beladungsvarianten benötigt. Es existieren bereits verschiedene Simulationen von Hubschraubern mit Außenlasten in allen Freiheitsgraden. Solche Modelle sind für die Untersuchung der Vertikalbewegung jedoch meist zu komplex und verstellen den Blick auf das Wesentliche. Aus diesem Grund soll hier ein Modell betrachtet werden, das auf die entscheidenden Aspekte reduziert ist. Hierzu werden vereinfachende Annahmen getroffen:

- Beschränkung der Freiheitsgrade auf die Vertikalbewegung

- Vernachlässigung der aerodynamischen Eigenschaften von Außenlast und Außenlastgeschirr

EP 2 279 359 B1

- Verwendung eines linearen aerodynamischen Modells des Hubschraubers

Die Eigenfrequenzen der Hubschrauberzelle liegen bei etwa 30 und 60 [rad/s] (vgl. Tabelle 1) und vergrößern somit den Arbeitsbereich des Dämpfungssystems. Die Eigendynamik der Hubschrauberzelle wird durch das zusätzliche Feder-Dämpfer-System zwischen m1 und m2 (vgl. Fig. 2 und Fig. 3) explizit berücksichtigt und in den Gesamtentwurf miteinbezogen.

Die Beschränkung auf die Vertikalbewegung bedeutet eine Reduktion des Gleichungssystems und ermöglicht dadurch eine übersichtliche Analyse. Da lineare Modelle betrachtet werden, sind alle Zustands- und Ausgangsgrößen als Abweichungen vom Trimmzustand zu verstehen. Trimmpunkt ist stets der Schwebeflug.

Die Außenlast wird durch einen starren Körper repräsentiert. Das Lastgeschirr wird durch eine lineare Feder-Dämpfer-Kombination ersetzt (Fig. 2 und Fig. 3).

Für das hier betrachtete System ergeben sich vier zentrale Eigenwerte, somit zwei zu berücksichtigende Eigenformen (vgl. Fig. 4). Die erste Eigenform (unterer Bereich in Fig. 4) kennzeichnet eine gemeinsame Schwingung der Massen $m_1$ und $m_3$, während $m_2$ in Ruhe verharrt (vgl. Fig. 2). Die zweite Eigenform (oberer Bereich) repräsentiert Schwingungen des Zellenbodens bzw. des Lasthakens (m2), während $m_1$ und $m_3$ in Ruhe verharren. Beide Eigenformen liegen in schwach gedämpfter bis grenzstabiler Form vor.

Um die Reaktion des Systems auf eine harmonische Anregung zu analysieren, müssen die Übertragungsfunktionen bzw. die Frequenzgänge des Gesamtsystems aus Fig. 2 ermittelt werden. Dabei sind hier insbesondere die Amplitudengänge der hochpassgefilterten Führungsgröße ($2\ddot{z}_1 + \ddot{z}_2$) von Interesse, da aus ihnen am besten ermittelt werden kann, ob kritische Resonanzfälle zu erwarten sind. Sie findet später im Beispiel einer einfachen Rückführung Verwendung. Das Hochpassfilter kompensiert die zu erwartenden Abweichungen (Drift) der Messsensören.

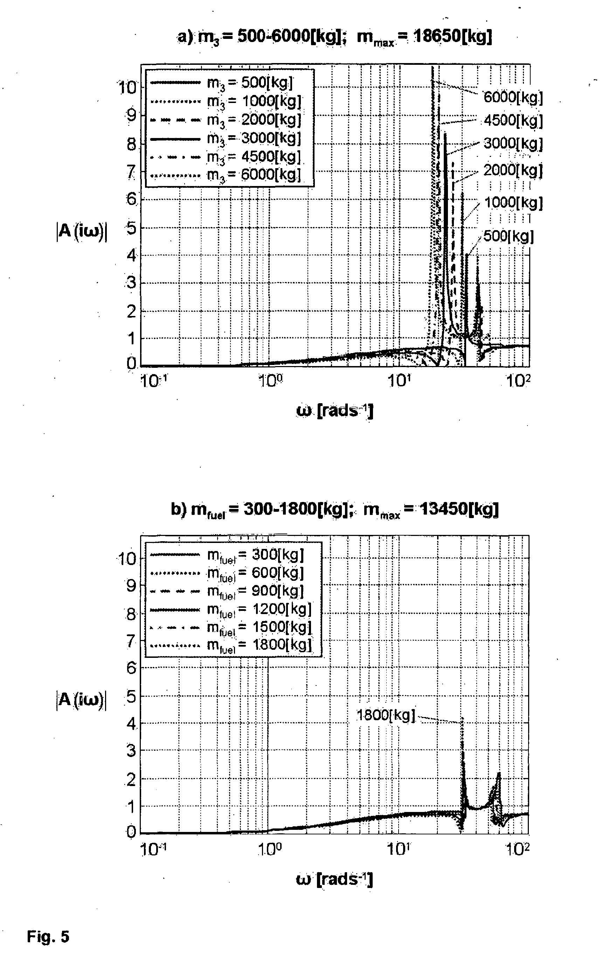

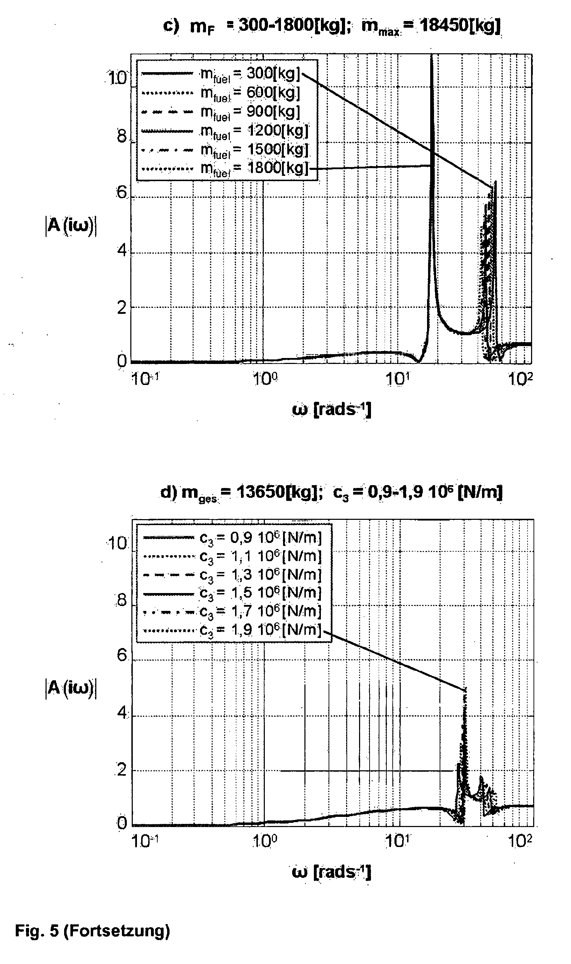

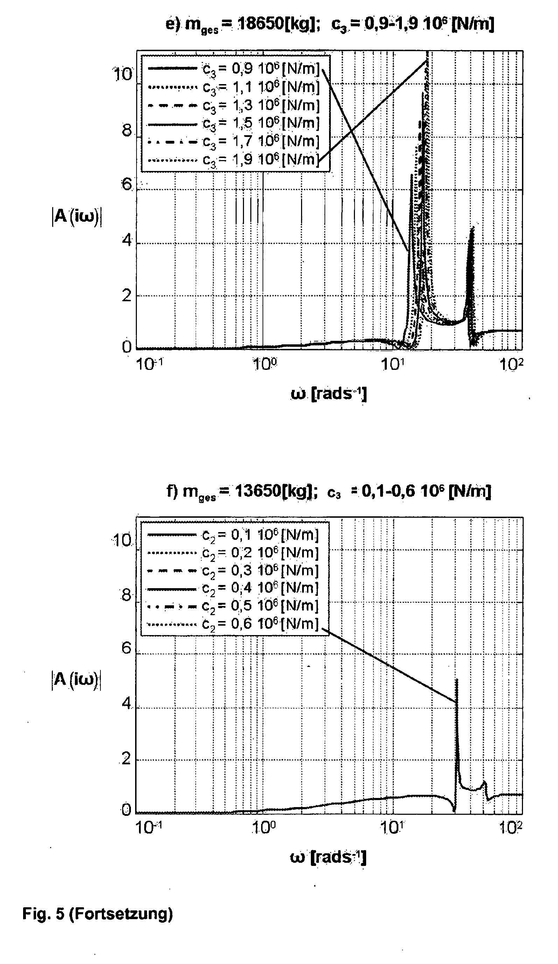

In der Bilderserie in Fig. 5 sind die Amplitudengänge für verschiedene Parametervariationen dargestellt. Geringe Dämpfungen komplexer Eigenwerte sind in den Amplitudengängen in Form von Resonanzüberhöhungen zu erkennen. Je geringer das Gewicht der Außenlast ist, desto näher rücken die beiden Eigenfrequenzen der Eigenformen zusammen; dies ist plausibel, da der Hubschrauber ohne Außenlast ($m_3 = 0$) nur eine charakteristische Eigenform aufweist. Die erste Eigenform im unteren Frequenzbereich stellt die gemeinsame Schwingung der Freiheitsgrade $z_1$ und $z_3$ dar, während $z_2$ in Ruhe verharrt (vgl. Fig. 2 und 3). Variationen der ersten Eigenform treten somit bei schweren Außenlasten mit Auswirkungen auf den Freiheitsgrad $z_3$ auf (vgl. Fig. 5 a) sowie infolge Veränderungen der Seilgeschirrsteifigkeit $c_3$ (vgl. Fig. 5d, e). Bei der zweiten Eigenform im oberen Frequenzbereich verharren $z_1$ und $z_3$ in Ruhe während $z_2$ eine Resonanz ausbildet. Veränderungen der Masse $m_2$, z.B. durch Änderungen der Betankungsmenge $m_{fuel}$, wirken sich somit auf die zweite Eigenform aus (vgl. Fig. 5b, c). Veränderungen der Steifigkeit $c_2$ der Abstützfeder wirken sich nicht auf das System aus (vgl. Fig. 5 f).

Für steigende Außenlastmassen bildet sich ein stärker werdender Eigenschwingungsmode fallender Frequenz mit Kopplung zwischen Außenlast und Hubschraubergetriebedeck aus ($m_3$ und $m_1$). Im Fall großer Außenlasten konvergiert diese Frequenz in die Nähe der Heckauslegerfrequenzen. Der Heckausleger ist unmittelbar am Getriebedeck befestigt, sodass Schwingungen zu Strukturschäden und in der Folge zu Totalverlusten führen können.

In Fig. 6 sind die Amplituden der Beschleunigungen der Freiheitsgrade $z_1$, $z_2$ und $z_3$ über das Anregungsspektrum im Kollektivsteuer für einen Referenzfall dargestellt. Es ist zu erkennen, dass im unteren Frequenzbereich (-20 rad/s) bei schweren Außenlasten messbare Überhöhungen in $z_1$ und $z_3$ auftreten, während $z_2$ in Ruhe bleibt, wie zuvor erläutert. Die größten Überhöhungen stellen sich an der Außenlast 3 ($z_3$) und am Lasthaken 5 ($z_2$) ein.

Um quantitative Aussagen zur auftretenden Frequenzamplituden zu treffen, wird das System über das Pilotensteuer mit sogenannten *Frequency-Sweeps* angeregt. Die Amplitude des Kollektivsteuers wurde so bestimmt, dass die Beschleunigungswerte in $z_1$ und $z_2$ im Resonanzfall die Grenze nach MIL-H-8501A *(military specification criteria for control and response characteristics)* von -0,2g nicht überschreiten, so wie es auch im vorliegenden konkreten Beispiel der CH53, der Fall ist.

Gemäß der militärischen Obergrenze für Vibrationen wurde das maximale Kollektivsteuer zu $\pm 0.5$cm ($\pm 2$%) Steuerausschlag bestimmt.

In Fig. 7 ist zu erkennen, dass zu verschiedenen Zeiten und somit Frequenzen verschiedene Schwingungsamplituden der Freiheitsgrade $z_1$, $z_2$ und $z_3$ erreicht werden. Wie zuvor fällt auf, dass $z_1$ und $z_3$ eine gemeinsame, aber entgegen gesetzte Schwingung durchlaufen. Die maximale Beschleunigung ergibt sich zum Zeitpunkt t=85 Sekunden in $z_2$ zu ~2,2m/s$^2$ (~0,22g). Für leichte Außenlasten 3 nimmt die Beschleunigung in $z_3$ zu (vgl. Fig. 8).

Aus den Bilderserien der Fig. 5, 6, 7 und 8 wird deutlich, dass die relevanten Schwingungsinformationen in den Beschleunigungen von $z_1$, $z_2$ und $z_3$ zu finden sind; die Frequenzen der Schwingungen $z_1$ und $z_3$ entsprechen dabei einander weitestgehend.

Besonders charakteristisch für die Steuereigenschaften des Systems ist die Reaktion auf sprungförmige Steuereingaben. Die Systemantwort auf einen Einheitssprung zeigt die Bilderserie in Fig. 9 für eine schwere Außenlast und die Bilderserie in Fig. 10 für eine leichte Außenlast. Das Übergangsverhalten mit Außenlast ist qualitativ sehr schlecht, wie die Betrachtung der Beschleunigungen zeigt. Dies liegt an der geringen Dämpfung der Schwingungsform.

Die Ziele des aktiven Dämpfungssystems können somit formuliert werden:

- Dämpfungserhöhung beider Eigenformen im Frequenzbereich von 10 bis 60 rad/s

- Dämpfung der Beschleunigungen in $z_1$ und $z_2$ auf maximal 0,2g (1,962 m/s$^2$)

Durch die durchgeführten Analysen am ungeregelten System (offene Strecke) konnte gezeigt werden, dass es zwei markante Eigenformen des Gesamtsystems gibt, die in ihrer Intensität und Frequenz maßgeblich vom Gewicht der Außenlast ($m_3$) und der Betankung ($m_2$) sowie der Steifigkeit des Seilgeschirrs ($c_3$) abhängen. Es konnte ferner gezeigt werden, dass die Informationen über beide Schwingungsformen in den Freiheitsgraden $z_1$ und $z_2$ vollständig abrufbar sind, sodass über die Messung des Spektrums von $z_1$ ebenfalls Schwingungen der Außenlast in $z_3$ detektierbar sind. Hierdurch ergibt sich die Möglichkeit, durch alleinige Messung von $z_1$ und $z_2$ eine Führungsgröße zur Regelung zu bestimmen, die Informationen über das gesamte auftretende Frequenzspektrum beinhaltet. Schwingungen der Außenlast in $z_3$ können als Führungsgrößeninformation vernachlässigt werden. Hierdurch ergibt sich der operationale Vorteil, dass keine zusätzliche Sensorik am Lastsystem (Außenlast und Seilgeschirr) montiert werden muss; des Weiteren müssen keine Signal- und Stromversorgungsleitungen aus dem Hubschrauber herausgeführt werden.

## Regelungsentwurf und Stellgliedspezifikationen

Bei der Auswahl des Dämpfungssystems muss berücksichtigt werden, dass dieses aus offensichtlichen Gründen nicht direkt zwischen Hubschrauber und Außenlast wirkt, sondern nur mit dem Lastgeschirr in Reihe geschaltet werden kann. Ein zusätzlicher in Reihe geschalteter Dämpfer verringert die Gesamtdämpfung. Dies ist der Grund, warum weder passive, adaptive noch semiaktive Systeme genutzt werden können. Nur ein aktives System kann die Dämpfung einer solchen Reihenschaltung erhöhen. Die Integration des aktiven Dämpfungssystems in das bestehende System Hubschrauber/Außenlast zeigt Fig. 3. Aufgrund der unkonventionellen Einbauposition des Schwingungsdämpfungssystems (Reihenschaltung), kann nicht auf bewährte Regelungsalgorithmen zurückgegriffen werden, wie sie für parallel geschaltete Systeme z.B. aus der automobilen Fahrwerkstechnik bekannt sind.

Um die Anforderungen an das Stellglied an Spezifikationen von im Handel erhältlichen Aktuatoren anzupassen, wurde eine zusätzliche Abstützung des Außenlastgewichts über eine steife Feder integriert (vgl. Fig. 3 Federsteifigkeit $c_2$). Dadurch wird der Leistungsbedarf des Stellgliedes verringert.

Die Struktur des Regelkreises zeigt Fig. 11. Formale Führungsgröße der Regelung ist die Relativbeschleunigung zwischen dem Hubschraubergetriebe bzw. der Rotoreinheit 4 ($z_1$) und dem Boden 10 der Hubschrauberzelle 6 bzw. dem Lasthaken 5 des Hubschraubers ($z_2$). Der Sollwert der Führungsgröße ist null, da Relativbewegungen (Vibrationen) der beiden Zellenniveaus $z_1$ und $z_2$ unterdrückt werden sollen. Die vorangegangenen Analysen an der offenen Strecke haben gezeigt, dass die gesamte Information über beide Eigenformen in den Signalen von $z_1$ und $z_2$ abrufbar sind und somit ebenfalls Schwingungen der Außenlast 3 in $z_3$.

Die Beschleunigungen der Hubschrauberzelle 6 in den Niveaus $z_1$ und $z_2$ werden mittels Beschleunigungsaufnehmern gemessen. Eine Steuerung mit dem Regelkreis aus Fig. 11 erzeugt eine Regelgröße $\delta u_R$, die auf das Stellglied wirkt; dieses realisiert anschließend die eigentliche Störgröße, den Stellweg $\delta u$ und die Stellweggeschwindigkeit $\dot{\delta u}$.

Die Rulativbeschleunigung zwischen Hubschrauber und Außenlast wird durch die Addition der beiden Beschleunigungssignale gebildet. Ferner hat sich gezeigt, dass das Regelungsergebnis verbessert werden kann, wenn das Signal in $z_1$ um den Faktor 2 verstärkt wird:

$$\Delta \ddot{z} = \left( 2\ddot{z}_1 + \ddot{z}_2 \right) \tag{1}$$

Das Messsignal wird im Folgenden hochpassgefiltert, um nur solche Frequenzen zu berücksichtigen, die über dem flugmechanischen Wirksamkeitsbereich liegen und um ein Driften der Sensoren zu kompensieren.

$$F_F\left( s \right) = \frac{Ts}{Ts+1} \tag{2}$$

Die Knickfrequenz des Filters muss so gewählt werden, dass nur Frequenzen im vom Piloten kontrollierbaren Bereich unterdrückt werden. Der Mensch ist in der Regel ab einer Frequenz von ungefähr einem Herz (-6 rad/s) nicht mehr in der Lage sinnvoll regelnd einzugreifen. Für die Grenzfrequenz wird

$$\omega_{gr} = \frac{1}{T} = 6 \ rad/s \tag{3}$$

gewählt. Wie später gezeigt werden wird, sind die Anforderungen an den Antrieb des Stellglieds bezüglich aufzubringender Kräfte, Laufgeschwindigkeiten und Stellleistungen verbunden mit Stellwegen von einigen Millimetern in solcher Größenordnung, dass diese für den hier betrachteten Hubschrauber von elektrischen Stellantrieben erfüllt werden können.

Die Übertragung solcher Stellglieder stellt ein Verzögerungsverhalten zweiter Ordnung dar, das durch die Übertragungsfunktion

$$F_{SG}(s) = \frac{K}{\frac{1}{\omega_0^2} s^2 + \frac{2D}{\omega_0} s + 1} \tag{4}$$

beschrieben wird. Damit das Stellglied seine Funktion erfüllen kann, muß dessen Eigenfrequenz über einen ausreichend großen Abstand zu den Eigenfrequenzen der Regelstrecke verfügen. Für den hier untersuchten Hubschrauber CH-53G liegt die höchste auftretende Frequenz in der Vertikalbewegung bei -50 rad/sec (vgl. Fig. 5). Eine Knickfrequenz von 60 rad/s und ein Dämpfungsmaß von D = 0.7 für den hier betrachteten Hubschraubertyp werden als ausreichend und vor dem Hintergrund technischer Spezifikationen als plausibel erachtet:

$$\omega_0 = 60 \ rad/s$$
$$D = 0.7 \tag{5}$$

Die Konstante K ist ein Umrechnungsfaktor. Er ist nur ungleich eins, falls der Reglerausgang nicht mit dem Stellweg des Antriebs identisch ist. Da diese Identität hier aber gegeben ist, gilt

$$K = 1 \tag{6}$$

Die Reglerauslegung an der offenen Strecke mit Sensorik und Stellglied führt zu einem den Parametervorgaben entsprechenden optimalen Ergebnis:

$$F_R(s) = 0.045 \cdot \frac{0.017s + 1}{0.67s + 1} \tag{7}$$

Die von der Regelung zu erfüllenden Anforderungen sind in Form der erzielbaren Dämpfung gestellt:

- das Systemverhalten muss stabil sein (negativer Realteil)
- Pole sehr nahe der imaginären Achse führen zu einem zu langsamen Verhalten
- Pole zu weit entfernt von der reellen Achse führen zu einem zu aggressiven Stellverhalten und zu einer zu geringen Robustheit gegenüber Modellfehlern
- Pole mit einem im Verhältnis zum Realteil zu großen Imaginärteil führen zu schwach gedämpftem Verhalten und somit zu starkem Überschwingen und Oszillationen

In den Fig. 12, 13 und 14 sind die Polverteilungen des geregelten Ersatzsystems aus Fig. 3 (x-Kennzeichnung) sowie des ungeregelten Ersatzsystems aus Fig. 2 (o-Kennzeichnung) dargestellt. Die jeweilige Markierung mit abweichender Größe zeigt den Pol an, der zu dem niedrigsten Variationswert gehört. Es sind die beiden Eigenformen 11, 12 der vertikalen Schwingung zu erkennen. Die erste Eigenform ist bestimmt durch die gemeinsame Schwingung von $m_1$ (Niveau $z_1$) und $m_3$ (Niveau $z_1$). Die zweite Eigenform ist bestimmt durch die Vibration des Zellenbodens 10 ($m_2$) bzw. des Lasthakens 5 ($m_2$, Niveau $z_2$).

In Fig. 12 ist die Polverteilung über der Variation der Masse $m_2$ (Betankungsmenge) dargestellt. Da sich die Tanks auf dem Niveau $z_2$ befinden, ist der Haupteinfluss der $m_2$-Variation in der zweiten Eigenform. Es ist erkennbar, dass die Dämpfung beider Eigenformen mit Zuschaltung des aktiven Dämpfungssystems (x-Kennzeichung) steigt. Mit Zunahme der Betankungsmenge wird die zweite Eigenform destabilisiert, bleibt aber hinreichend gedämpft (stabil).

Die Polverteilung des geregelten und ungeregelten Systems unter Variation des Lastgewichts ist in Flg. 13 dargestellt. Beide Eigenformen werden maßgeblich beeinflusst. Für geringe Lastgewichte wird trotz der aktiven Dämpfung der Pol der ersten Eigenform nicht signifikant gedämpft (Überschneidung des hervorgehobenen x mit dem hervorgehobenen o). Das liegt daran, dass die Außenlast im Bereich 500 bis 1250 kg (die ersten 4 Variationen) nur geringen Einfluss auf die Hubschraubervibrationen ausübt. Von einer leichten Außenlast verursachte Vibrationen sind nicht als Information in der Führungsgröße zu finden. Die aktive Dämpfung hat dadurch zwar keine Möglichkeit, die Dämpfung der Pole leichter Außenlasten zu erhöhen; andererseits ist der Einfluss leichter Außenlasten vernachlässigbar, sodass es nicht nötig ist, solche Eigenformen zu dämpfen. Tests haben jedoch nachgewiesen, dass durch eine Anpassung der Führungsgröße auch die erste Eigenform gedämpft werden kann.

Die zweite Eigenform als Bewegung des Zellenbodens wird weiterhin durch den Einsatz der Regelung gedämpft. Mit zunehmendem Lastgewicht nimmt die Dämpfung der zweiten Eigenform ab, bleibt aber hinreichend stabil.

Die Polverteilung des geregelten sowie ungeregelten Systems unter Variation der Seilgeschirrsteifigkeit $c_3$ ist in Fig. 14 dargestellt. Beide Eigenformen werden durch den Einsatz des aktiven Dämpfungssystems stabilisiert. Die Dämpfungen der Pole nehmen mit steigender Steifigkeit weiter zu. In der Regel finden Seilgeschirre mit hoher Steifigkeit Anwendung.

In Ergänzung zu den vorangegangenen Erläuterungen ist in Bilderserie in Fig. 15 zu dem geregelten Systems deutlich zu erkennen, dass die Amplituden der Führungsgröße gegenüber dem ungeregelten System durchschnittlich um den Faktor zehn abnehmen (vgl. Fig. 5). Somit ist nachweisbar, dass durch den Einsatz des geregelten aktiven Stellgliedes eine effektive Dämpfung erreicht wird, die für relevante Parametervariationen Gültigkeit besitzt.

Die Sprungantworten der Bewegungen der drei Niveaus für eine leichte Außenlast in Fig. 16 zeigen an, dass das Nachschwingen des Systems durch den Reglereinsatz trotz der verminderten Reglerwirksamkeit unterbunden wird (vgl. Fig. 13). Das statische Lastgewicht wird von der Feder $c_2$ aufgenommen und getragen (vgl. Fig. 3). Die maximale dynamische Kraft des Linearaktuators 13 auf eine Sprungeingabe von 20[%] (5[cm]) beträgt 7000[N] (Leistung ∼2200[W]), der maximale Stellweg 0.025[m].

Die Sprungantworten des Systems (vgl. Fig. 17) können im Fall einer schweren Außenlast effektiv gedämpft werden. Das statische Lastgewicht wird von der Feder $c_2$ aufgenommen und getragen (vgl. Fig. 3). Die maximale dynamische Kraft des Stellaktuators 13 auf eine Sprungeingabe von 20[%] (5[cm]) beträgt 13000[N] (Leistung 15000[W]), der maximale Stellweg 0.022[m].

Fig. 18 zeigt die dynamische Reaktion des Systems auf einen Frequenz-Sweep-Eingang mit leichter Außenlast (vgl. Fig. 8). Den zuvor erläuterten Zusammenhängen folgend, ist das System zwar stabil, wird jedoch nicht maßgeblich gedämpft. Der Einfluss einer leichten Außenlast auf den Hubschrauber ist vernachlässigbar.

Fig. 19 zeigt die dynamische Reaktion des Systems auf einen Frequenz-Sweep am Steuer bei schwerer Außenlast (vgl. Fig. 7). Den zuvor erläuterten Zusammenhängen folgend, ist das System stabil; die Dämpfung wird maßgeblich erhöht.

## Zusammenfassung der Ergebnisse

Eine Schwingungsdämpfung (Dämpfung der Eigenschwingungen) mittels eines aktiven Dämpfungssystems auf Grundlage der Spezifikationen eines elektrischen Stellaktuators und vereinfachter Modellannahmen ist erreichbar.

Der Regler wurde auf Basis der Führungsgröße erstellt, die sich aus zwei Vibrationsspektren zusammensetzt, die an unterschiedlichen Orten der Hubschrauberzelle aufgenommen werden. Eine zusätzliche Messung der Vibrationen im Lastsystem (Seilgeschirr und Außenlast) ist nicht notwendig.

Robustheit bezüglich Massen-, Steifigkeits- und Seillängenvariationen ist gegeben.

Biegeweiche Strukturen wie beispielsweise der Heckausleger sind häufig mit dem oberen Zellenniveau ($z_1$) verbunden. Die Reduktion der Vibrationen in $z_1$ ist daher wesentlich, um Strukturschäden vorzubeugen und zu vermeiden.

Für den Zellenboden 10 bzw. Lasthaken 5 stellen sich für geringe Gewichte der Außenlast 3 gleiche Vibrationen mit und ohne Dämpfungssystem ein; kleine Lastgewichte werden jedoch als unkritisch erachtet, da sie weniger Einfluss auf die Hubschrauber- und somit Zellenbewegung haben; schwere Außenlasten 3 werden zuverlässig gedämpft.

## Anforderungen an das Stellglied

Ausgehend von der durch die MIL-H-8501A vorgegebenen maximalen periodischen Anregung im Kollektivsteuer von ±0,5cm (±2%) und der Analyse der Sprungantworten sowie der Reaktionen auf einen Frequenz-Sweep am Steuer bei dem geschlossenen Regelkreises können der maximale Stellweg, die maximale Hubfrequenz sowie die maximale Ober- und Untergrenze aufzubringender Kräfte und Leistungen des elektrischen Stellgliedes bestimmt werden:

$$\delta_{u\,max} \approx \pm 30mm$$
$$f_{0\,max} \approx 10Hz$$
$$F_{A\,max} \approx (stat.Last \pm 12)\,kN$$
$$P_{A\,max} \approx 15kW \qquad\qquad\qquad \sim \qquad\qquad (8)$$

Bei Verwendung unterschiedlicher Kennwerte z.B. für das Seilgeschirr, können die Anforderungen an das Stellglied in Form des maximalen Stellwegs, der maximalen Kraft und maximalen Ansteuerfrequenz variieren. Das Regelverfahren, und damit verbunden die Ergebnisse der Robustheitsanalyse, bleiben bestehen. Die Übertragbarkeit des Verfahrens auf verschiedene Fälle ist gegeben.

Die grundsätzlichen Betrachtungen zeigen, dass die Herangehensweise der effektiven Dämpfungserhöhung kritischer vertikaler Schwingungen mittels eines in Reihe geschalteten elektrischen Stellaktuators und Messungen der Vibrationen in der Hubschrauberzelle zum Erfolg führt.

### Anmerkungen

Es wird darauf hingewiesen, dass bei Realisierung des aktiven Schwingungsdämpfungssystems die Platzierung der Sensoren hubschrauberindividuell durchgeführt werden muss.

Darüber hinaus ist zu entscheiden, ob zwei getrennt voneinander operierende Regler Einsatz finden sollten, die optimal für jeweils den unteren und oberen Frequenzbereich (erste und zweite Eigenform) arbeiten. Hierfür müssen die Sensoren und Sensorsignale spezifisch installiert und aufbereitet werden. Der Vorteil dieser erweiterten Umsetzung liegt insbesondere in der Möglichkeit der Dämpfungserhöhung der ersten Eigenform bei leichten Außenlasten (vgl. Fig. 13).

Die Erfindung kann in allen Gebieten der Hubschrauber-Außenlastfliegerei eingesetzt werden. Als Beispiele sind hier zu nennen:

- Lasttransporte in schwer zugängliche Gebiete

- Montage von hohen oder unzugänglichen Objekten

- Rettung von Personen

- Brandbekämpfung

- Forstarbeiten.

### BEZUGSZEICHENLISTE

1 Hubschrauber
2 Lastgeschirr
3 Außenlast
4 Rotorantriebseinheit
5 Lastaufnahmepunkt
6 Hubschrauberzelle
7 Lastgeschirrsteifigkeit und -dämpfung
8 Zellensteifigkeit und -dämpfung
9 Aktives Dämpfungssystem
10 Boden
11 Eigenform
12 Eigenform
13 Linearaktuator

**Patentansprüche**

1. Verfahren zum Dämpfen von Vertikalschwingungen bei einem eine Rotorantriebseinheit (4) und eine Hubschrauberzelle (6) aufweisenden Hubschrauber (1) mit einer über ein Lastgeschirr (2) an einen Lastaufnahmepunkt (5) der Hubschrauberzelle (6) angehängten Außenlast (3), wobei Gegenkräfte zu den Vertikalschwingungen zwischen dem Lastaufnahmepunkt (5) und dem Lastgeschirr (3) aufgebracht werden, **dadurch gekennzeichnet, dass** mit Schwingungssensoren an dem Hubschrauber (1) die Anregungen zumindest einer ersten Eigenform (11) der Vertikalschwingungen, bei der die Außenlast (3) und die Rotorantriebseinheit (4) gemeinsam gegenüber dem Lastaufnahmepunkt (5) schwingen, und einer zweiten Eigenform (12) der Vertikalschwingungen, bei der der Lastaufnahmepunkt (5) gegenüber der Außenlast (3) und der Rotorantriebseinheit (4) schwingt, erfasst werden und dass die Gegenkräfte abhängig von Phase und Amplitude der erfassten Anregungen mit einem aktiv angesteuerten Linearaktuator (13) eingeleitet werden.

2. Verfahren nach Anspruch 1, **dadurch gekennzeichnet, dass** die Eigenfrequenz der ersten Eigenform (11) zwischen 10 und 30 rad/s liegt.

3. Verfahren nach Anspruch 1 oder 2, **dadurch gekennzeichnet, dass** die Eigenfrequenz der zweiten Eigenform (12) zwischen 30 und 60 rad/s liegt.

4. Verfahren nach einem der Ansprüche 1 bis 3, **dadurch gekennzeichnet, dass** die Schwingungssensoren an der Rotorantriebseinheit (4) und dem Lastaufnahmepunkt (5) oder einem Boden (10) der Hubschrauberzelle (6) angeordnet werden.

5. Verfahren nach einem der Ansprüche 1 bis 4 **dadurch gekennzeichnet, dass** die Anregungen je Eigenform (11, 12) der Vertikalschwingungen mit einem Schwingungssensor an dem Hubschrauber (1) erfasst werden.

6. Verfahren nach einem der Ansprüche 1 bis 5, **dadurch gekennzeichnet, dass** das Lastgeschirr (2) parallel zu dem Linearaktuator (13) über eine Abstützfeder an dem Hubschrauber (1) abgestützt wird.

7. Vorrichtung zum Dämpfen von Vertikalschwingungen bei einem eine Rotorantriebseinheit (4) und eine Hubschrauberzelle (6) aufweisenden Hubschrauber (1) mit einer über ein Lastgeschirr (2) an einen Lastaufnahmepunkt (5) der Hubschrauberzelle (6) angehängten Außenlast (3), wobei Einrichtungen zum Aufbringen von Gegenkräften zu den Vertikalschwingungen zwischen dem Lastaufnahmepunkt (5) und dem Lastgeschirr (2) vorgesehen sind, **dadurch gekennzeichnet, dass** Schwingungssensoren an dem Hubschrauber (1) angeordnet sind und zumindest die Anregungen einer ersten Eigenform (11) der Vertikalschwingungen, bei der die Außenlast (3) und die Rotorantriebseinheit (4) gemeinsam gegenüber dem Lastaufnahmepunkt (5) schwingen, und die Anregung einer zweiten Eigenform (12) der Vertikalschwingungen, bei der der Lastaufnahmepunkt (5) gegenüber der Außenlast (3) und der Rotorantriebseinheit (4) schwingt, erfassen, und dass die Einrichtungen zum Aufbringen von Gegenkräften einen aktiv ansteuerbaren Linearaktuator (13) aufweisen und den Linearaktuator (13) in Abhängigkeit von Phase und Amplitude der erfassten Anregungen aktiv ansteuern.

8. Vorrichtung nach Anspruch 7, **dadurch gekennzeichnet, dass** die Schwingungssensoren an der Rotorantriebseinheit (4) und dem Lastabstützpunkt (5) oder einem Boden (10) der Hubschrauberzelle (6) angeordnet sind.

9. Vorrichtung nach einem der Ansprüche 7 und 8, **dadurch gekennzeichnet, dass** die Schwingungssensoren Beschleunlgungsaufnehrner ausweisen.

10. Vorrichtung nach einem der Ansprüche 7 bis 9, **dadurch gekennzeichnet, dass** das Lastgeschirr (2) parallel zu dem Linearaktuator (13) über ein Federelement an dem Hubschrauber (1) abgestützt wird.

11. Vorrichtung nach einem der Ansprüche 7 bis 10, **dadurch gekennzeichnet, dass** der Linearaktuator (13) einen elektromotorischen oder hydraulischen Antrieb aufweist.

**Claims**

1. Method of damping vertical oscillations in a helicopter (1) having a rotor drive-unit (4) and an airframe (6) and carrying an external load (3) suspended via a lifting gear (2) from a load attachment point (5) on the airframe (6) of the helicopter, forces opposed to the vertical oscillations being applied between the load attachment point (5) and the lifting gear (3), **characterised in that** the excitations at least of a first mode (11) of the vertical oscillations, in which the external load (3) and the rotor drive-unit (4) oscillate together relative to the load attachment point (5), and of a second mode (12) of the vertical oscillations, in which the load attachment point (5) oscillates relative to the external load (3) and the rotor drive-unit (4), are sensed by oscillation sensors on the helicopter (1), and **in that** the opposing forces are applied by an actively operated linear actuator (13) as a function of phase and amplitude of the sensed excitations.

2. Method according to claim 1, **characterised in that** the eigenfrequency of the first mode (11) is between 10 and 30 rad/s.

3. Method according to claim 1 or 2, **characterised in that** the eigenfrequency of the second mode (12) is between 30 and 60 rad/s.

4. Method according to any of the claims 1 to 3, **characterised in that** the oscillation sensors are arranged on the rotor drive-unit (4) and the load attachment point (5) or a floor (10) of the airframe (6) of the helicopter.

5. Method according to any of the claims 1 to 4, **characterised in that** the excitations per each mode (11, 12) of the vertical oscillations are sensed by one oscillation sensor on the helicopter (1).

6. Method according to any of the claims 1 to 5, **characterised in that** the lifting gear (2) is supported on the helicopter (1) by means of a supporting spring in parallel with the linear actuator (13).

7. Apparatus for damping vertical oscillations in a helicopter (1) having a rotor drive-unit (4) and an airframe (6) and carrying an external load (3) suspended via a lifting gear (2) from a load attachment point (5) on the airframe (6), devices for applying forces opposed to the vertical oscillations being provided between the load attachment point (5) and the lifting gear (2), **characterised in that** oscillation sensors are arranged on the helicopter (1) and sense at least the excitations of a first mode (11) of the vertical oscillations, in which the external load (3) and the rotor drive-unit (4) oscillate together relative to the load attachment point (5), and the excitation of a second mode (12) of the vertical oscillations, in which the load attachment point (5) oscillates relative to the external load (3) and the rotor drive-unit (4), and **in that** the devices for applying opposed forces have an actively operatable linear actuator (13) and actively operate the linear actuator (13) as a function of the phase and amplitude of the sensed excitations.

8. Arrangement according to claim 7, **characterised in that** the oscillation sensors are arranged on the rotor drive-unit (4) and the load supporting point (5) or a floor (10) of the airframe (6) of the helicopter.

9. Arrangement according to any of the claims 7 and 8, **characterised in that** the oscillation sensors comprise accelerometers.

10. Arrangement according to any of the claims 7 to 9, **characterised in that** the lifting gear (2) is supported on the helicopter (1) by means of a resilient element in parallel with the linear actuator (13).

11. Arrangement according to any of the claims 7 to 10, **characterised in that** the linear actuator (13) has an electric motor or hydraulic drive.

**Revendications**

1. Procédé permettant d'amortir les vibrations verticales dans un hélicoptère (1) comportant une unité d'entraînement à rotor (4) et une cellule d'hélicoptère (6) et muni d'une charge extérieure (3) suspendue au moyen d'un harnais (2) à un point de réception de charge (5) de la cellule d'hélicoptère (6), des forces opposées aux vibrations verticales étant appliquées entre le point de réception de charge (5) et le harnais (3), **caractérisé en ce que** les stimulations selon au moins une première forme inhérente (11) des vibrations verticales, sous l'effet de laquelle la charge extérieure (3) et l'unité d'entraînement à rotor (4) vibrent conjointement par rapport au point de réception de charge (5), et selon une deuxième forme inhérente (12) des vibrations verticales, sous l'effet de laquelle le point de réception de charge (5) vibre par rapport à la charge extérieure (3) et à l'unité d'entraînement à rotor (4), sont détectées par des capteurs de vibrations sur l'hélicoptère (1) , et **en ce que** les forces opposées sont introduites par un actionneur linéaire (13) commandé de manière active, en fonction de la phase et de l'amplitude des stimulations détectées.

2. Procédé selon la revendication 1, **caractérisé en ce que** la fréquence intrinsèque de la première forme inhérente (11) se situe entre 10 et 30 rad/s.

3. Procédé selon la revendication 1 ou 2, **caractérisé en ce que** la fréquence intrinsèque de la deuxième forme inhérente (12) se situe entre 30 et 60 rad/ s.

4. Procédé selon l'une quelconque des revendications 1 à 3, **caractérisé en ce que** les capteurs de vibrations sont disposés sur l'unité d'entraînement à rotor (4) et le point de réception de charge (5) ou sur un sol (10) de la cellule d'hélicoptère (6).

5. Procédé selon l'une quelconque des revendications 1 à 4, **caractérisé en ce que** les stimulations pour chaque forme inhérente (11, 12) des vibrations verticales sont détectées sur l'hélicoptère (1) au moyen d'un capteur de vibrations.

6. Procédé selon l'une quelconque des revendications 1 à 5, **caractérisé en ce que** le harnais (2) est supporté par un ressort d'appui sur l'hélicoptère (1), parallèlement à l'actionneur linéaire (13).

7. Dispositif permettant d'amortir les vibrations verticales dans un hélicoptère (1) comportant une unité d'entraînement à rotor (4) et une cellule d'hélicoptère (6) et muni d'une charge extérieure (3) suspendue au moyen d'un harnais (2) à un point de réception de charge (5) de la cellule d'hélicoptère (6), des dispositifs permettant l'application de forces opposées aux vibrations verticales étant prévus entre le point de réception de charge (5) et le harnais (2), **caractérisé en ce que** des capteurs de vibrations sont disposés sur l'hélicoptère (1) et détectent au moins les stimulations selon au moins une première forme inhérente (11) des vibrations verticales, sous l'effet de laquelle la charge extérieure (3) et l'unité d'entraînement à rotor (4) vibrent conjointement par rapport au point de réception de charge (5), et la stimulation selon une deuxième forme inhérente (12) des vibrations verticales, sous l'effet de laquelle le point de réception de charge (5) vibre par rapport à la charge extérieure (3) et à l'unité d'entraînement à rotor (4), et **en ce que** les dispositifs permettant l'application de forces opposées comportent un actionneur linéaire (13) pouvant être commandé activement et commandent activement ledit actionneur linéaire (13) en fonction de la phase et de l'amplitude des stimulations détectées.

8. Dispositif selon la revendication 7, **caractérisé en ce que** les capteurs de vibrations sont disposés sur l'unité d'entraînement à rotor (4) et le point de réception de charge (5) ou sur un sol (10) de la cellule d'hélicoptère (6).

9. Dispositif selon les revendications 7 et 8, **caractérisé en ce que** les capteurs de vibrations sont des récepteurs d'accélération.

10. Dispositif selon l'une quelconque des revendications 7 à 9, **caractérisé en ce que** le harnais (2) est supporté par un ressort d'appui sur l'hélicoptère (1), parallèlement à l'actionneur linéaire (13).

11. Dispositif selon l'une quelconque des revendications 7 à 10, **caractérisé en ce que** l'actionneur linéaire (13) est un système d'entraînement électromotorisé ou hydraulique.

**Fig. 1**

**Fig. 2**

**Fig. 3**

Fig. 4

Fig. 6

a) $m_3$ = 500-6000[kg]; $m_{max}$ = 18650[kg]

b) $m_{fuel}$ = 300-1800[kg]; $m_{max}$ = 13450[kg]

**Fig. 5**

c) $m_F$ = 300-1800[kg]; $m_{max}$ = 18450[kg]

d) $m_{ges}$ = 13650[kg]; $c_3$ = 0,9-1,9 10⁶ [N/m]

Fig. 5 (Fortsetzung)

e) $m_{ges}$ = 18650[kg]; $c_3$ = 0,9-1,9 $10^6$ [N/m]

f) $m_{ges}$ = 13650[kg]; $c_3$ = 0,1-0,6 $10^6$ [N/m]

Fig. 5 (Fortsetzung)

$m_1 = 8520[kg]$; $m_2 = 3630$ [kg]; $m_{fuel} = 1500$ [kg]; $m_3 = 6000$ [kg]

**Fig. 7**

$m_1 = 8520[kg]$; $m_2 = 3630$ [kg]; $m_{fuel} = 1500$ [kg]; $m_3 = 500$ [kg]

**Fig. 8**

22

$m_1 = 8520[kg]; \quad m_2 = 3630 \; [kg]; \quad m_{fuel} = 1500 \; [kg]; \quad m_3 = 6000 \; [kg]$

**Fig. 9**

$m_1 = 8520[kg]; \quad m_2 = 3630 \; [kg]; \quad m_{fuel} = 1500 \; [kg]; \quad m_3 = 500 \; [kg]$

**Fig. 10**

**δc**

| Stellglied | δu, δü | Regelstrecke | z̈₁, z̈₂ | Sensorik | Δz̈ |

**δu_R** | Regler | **Δz̈**

**Δz̈ = 0**

**Fig. 11**

✕ geregeltes System
◯ ungeregeltes System

12

2. Eigenform

11

1. Eigenform

Re(iω)

**Fig. 12**

**Fig. 13**

**Fig. 14**

a) $m_3 = 500\text{-}6000[\text{kg}]$; $m_{max} = 18650[\text{kg}]$

b) $m_F = 300\text{-}1800[\text{kg}]$; $m_{max} = 13450[\text{kg}]$

Fig. 15

c) $m_F = 300\text{-}1800[kg]$; $m_{max} = 18450[kg]$

d) $m_{ges} = 13650[kg]$; $c_3 = 0,9\text{-}1,9 \cdot 10^6 [N/m]$

Fig. 15 (Fortsetzung)

e) $m_{ges}$ = 18650[kg]; $c_3$ = 0,9-1,9 10⁶ [N/m]

f) $m_{ges}$ = 13650[kg]; $c_3$ = 0,1-0,6 10⁶ [N/m]

Fig. 15 (Fortsetzung)

$m_1 = 8520[kg]$; $m_2 = 3630\ [kg]$; $m_{fuel} = 1500\ [kg]$; $m_3 = 500\ [kg]$

**Fig. 16**

$m_1 = 8520[kg];\ m_2 = 3630\ [kg];\ m_{fuel} = 1500\ [kg];\ m_3 = 6000\ [kg]$

Fig. 17

Fig. 18

$m_1 = 8520[kg];\ m_2 = 3630\ [kg];\ m_{fuel} = 1500\ [kg];\ m_3 = 6000\ [kg]$

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005022212 A1
- DE 69015572 T2
- DE 69430264 T2
- US 3904156 A

**In der Beschreibung aufgeführte Nicht-Patentliteratur**

- **BUCHACKER, E.** Flight Test Evaluation of the PIO-behaviour of a Helicopter with Suspended Cargo. *AGARD, CP333,* 24. Juni 1982